# EUROPÄISCHE PATENTANMELDUNG

(11) **EP 4 552 830 A1**
(43) Veröffentlichungstag der Anmeldung: **14.05.2025**
(21) Anmeldenummer: 23208784.1
(22) Anmeldetag: 09.11.2023
(51) Int. Cl.: B29C 65/18, B29C 53/50, B29C 65/48, B29C 65/50, B29C 65/78, B31B 70/00

(54) **VERFAHREN ZUR HERSTELLUNG VON FLEXIBLEN TUBENKÖRPERN AUS ZWEI SUBSTRATBAHNEN**

(71) Anmelder: PackSys Global AG, 8630 Rüti (CH)
(72) Erfinder: LIU, Xiaochun, 8051 Zürich (CH); LÄUBLI, Julius, 8645 Jona (CH); ESSER, Ulrich, 8630 Rüti (CH)
(74) Vertreter: Patent- und Rechtsanwälte Behrmann Wagner PartG mbB

(57) **Zusammenfassung**

Die Erfindung betrifft ein Verfahren zur Herstellung von flexiblen Tubenkörpern für Verpackungstuben, sowie einen nach dem Verfahren hergestellten Tubenkörper, aus zwei, bevorzugt getrennten, besonders bevorzugt unterschiedliche Materialien aufweisenden, Substratbahnen, wobei eine erste Substratbahn von einem, bevorzugt auf einer Außenseite eine Bedruckung aufweisenden, Formsubstrat gebildet wird, welches bevorzugt faserhaltig ist oder faserhaltige Bestandteile aufweist, und welches eine sich in eine Längsrichtung erstreckende erste Längsrandseite und eine hierzu parallele und beabstandete zweite Längsrandseite umfasst, und die zweite Substratbahn von einem Foliensubstrat gebildet wird, welches mindestens eine verschweißbare Kunststoffschicht aufweist oder aus dieser besteht und welches eine sich in eine Längsrichtung erstreckende erste Längsrandseite und eine hierzu parallele und beabstandete zweite Längsrandseite umfasst, umfassend ein Zuführen der Substratbahnen, wobei während des Zuführens die Substratbahnen benachbart zueinander, bevorzugt im Wesentlichen deckungsgleich, angeordnet werden, ein Umformen des Formsubstrats und des Foliensubstrats mit, bevorzugt gemeinsamen, Umformmitteln zu einer Rohrform, wobei das Formsubstrat ein äußeres Rohr und das Foliensubstrat ein inneres Rohr ausbildet, und wobei für das äußere Rohr und das innere Rohr eine Überlapp- oder Stoßanordnung der jeweiligen Längsrandseiten erzeugt wird, ein Führen der Längsrandseiten des Formsubstrats und des Foliensubstrats, zwischen einem äußeren und einem inneren, bevorzugt umlaufend angetriebenen, Kontaktband, sowie ein Erwärmen der Längsrandseiten des Formsubstrats und des Foliensubstrats über eine innere und/oder äußere Heizeinrichtung, wobei eine erste Verbindung, bevorzugt Klebeverbindung, zwischen den Längsrandseiten des Formsubstrats und wenigstens annähernd gleichzeitig eine zweite Verbindung, bevorzugt Längsschweißnaht, zwischen den Längsrandseiten des Foliensubstrats ausgebildet wird.

## Beschreibung

Die vorliegende Erfindung betrifft ein Verfahren zur Herstellung von flexiblen Tubenkörpern für Verpackungstuben aus zwei, bevorzugt getrennten, besonders bevorzugt unterschiedliche Materialien aufweisenden, Substratbahnen. Weiterhin betrifft die Erfindung eine flexible Verpackungstube, welche nach dem erfindungsgemäßen Verfahren hergestellt wurde und eine Vorrichtung zur Herstellung eines flexiblen Tubenkörpers nach einem erfindungsgemäßen Verfahren.

Aus dem Stand der Technik sind Verfahren zur Herstellung von Tubenkörpern grundsätzlich in unterschiedlicher Ausprägung bekannt, wobei ein bogenförmiges Foliensubstrat in eine Rohrform umgeformt wird, indem es über, zum Beispiel als Dorn ausgebildete, Umformmittel gezogen wird. Das Foliensubstrat, welches mindestens eine verschweißbare Kunststoffschicht aufweist oder aus einer solchen besteht, wird dabei mit seinen Längsrandseiten überlappend oder auf Stoß angeordnet. Durch einen Verbindungsprozess, insbesondere eine Verschweißung, an den Längsrandseiten wird somit zunächst ein Endlosrohr hergestellt, auf welches vor einer Zerteilung in einzelne, in der Regel zylindrische, Tubenkörper, zum Beispiel noch zur Verbesserung der Rundheit eingewirkt werden kann.

Um Tubenkörper aus mehr als einem Substrat oder mehr als einer Substratbahn herzustellen, zum Beispiel einem Foliensubstrat zur Aufnahme des zu bevorratenden Stoffs und einem Formsubstrat, zum Beispiel zur Erhöhung der Stabilität des Tubenkörpers, ist im Stand der Technik bisher vorgesehen, die einzelnen Substrate oder Substratbahnen unabhängig voneinander zu verarbeiten und formen, und erst als geformte und vereinzelte Rohre, miteinander zu verbinden, bzw. ineinander anzuordnen. Alternativ wird zunächst ein Endlosrohr oder bereits abgeteilte Tubenkörper geformt und die zweite Substratbahn um das bestehende Rohr herum geformt, zum Beispiel indem das Endlosrohr oder der Tubenkörper mit der zweiten Substratbahn umfahren oder umschlagen wird. Beide beschriebenen Vorgehensweisen haben dabei den Nachteil, dass der Produktionsaufwand durch die zweite Substratbahn maßgeblich gegenüber der Herstellung mit nur einer Substratbahn erhöht wird und durch die einzelne Bearbeitung der Substratbahnen Fehler in der endgültigen Anordnung der Tubenrohe aneinander entstehen können, welche zum Beispiel die Dichtigkeit, mechanische Stabilität und/oder das optische Erscheinungsbild des Tubenkörpers negativ beeinflussen.

Da bisher im Stand der Technik also beide Substratbahnen, besonders das Foliensubstrat, weitestgehend eigenständig umgeformt wurden, sind bisher auch die Materialwahl und Materialausgestaltung dahingehend eingeschränkt, dass, zum Beispiel über die Materialdicke, eine ausreichende Stabilität vorhanden sein muss, um die Substratbahnen eigenständig durch Umformmittel formen zu können, ohne dass die einzelnen Substratbahnen dabei beschädigt werden, insbesondere ohne, dass eine Substratbahn reißt,verzogen wird oder kollabiert. Hierdurch fallen einerseits solche aus zwei Substratbahnen hergestellte Tubenkörper bisher verhältnisweise dickwandig aus, wobei der Umfang der Tube erhöht werden muss, um das gleiche Innenvolumen wie eine vergleichbare Tube aus einer Substratbahn zu erreichen, und andererseits kann, zum Beispiel bei schwer zu rezyklierenden oder teuren Substraten, keine nennenswerte Materialeinsparung, besonders beim Foliensubstrat, für die einzelnen Substratbahnen erreicht werden.

Vor diesem Hintergrund liegt die Aufgabe der vorliegenden Erfindung darin, die Nachteile im Stand der Technik wenigstens teilweise zu überwinden und insbesondere ein optimiertes Verfahren zur Herstellung eines flexiblen Tubenkörpers aus zwei Substratbahnen bereitzustellen.

Diese Aufgabe wird durch ein Verfahren mit den Merkmalen des Anspruchs 1 gelöst. Weiterhin wird die Aufgabe durch einen Tubenkörper mit den Merkmalen des Anspruchs 17 gelöst und durch eine Vorrichtung zur Herstellung eines Tubenkörpers mit den Merkmalen des Anspruchs 25.

Vorteilhafte Ausführungsformen des erfindungsgemäßen Verfahrens zur Herstellung eines flexiblen Tubenkörpers und der nach einem erfindungsgemäßen Verfahren hergestellten flexiblen Tubenkörper sowie der Vorrichtung zu Herstellung eines flexiblen Tubenkörpers sind Gegenstand der nachfolgenden Beschreibung und Figurenbeschreibung, der Figuren sowie der Unteransprüche.

Die verfahrensmäßig beschriebenen und beanspruchten Merkmale sollen auch als entsprechend vorrichtungsmäßig offenbart und beanspruchbar gelten, und umgekehrt.

In einem ersten Aspekt betrifft die Erfindung ein Verfahren zur Herstellung von flexiblen Tubenkörpern für Verpackungstuben aus zwei, bevorzugt getrennten, besonders bevorzugt unterschiedliche Materialien aufweisenden, Substratbahnen.

Dabei wird eine erste Substratbahn von einem, bevorzugt auf einer Außenseite eine Bedruckung aufweisenden, Formsubstrat gebildet, welches bevorzugt faserhaltig ist oder faserhaltige Bestandteile aufweist, und welches eine sich in eine Längsrichtung erstreckende erste Längsrandseite und eine hierzu parallele und beabstandete zweite Längsrandseite umfasst, und die zweite Substratbahn wird von einem Foliensubstrat gebildet, welches mindestens eine verschweißbare Kunststoffschicht aufweist oder aus dieser besteht und welches eine sich in eine Längsrichtung erstreckende erste Längsrandseite und eine hierzu parallele und beabstandete zweite Längsrandseite umfasst.

Das Verfahren umfasst dabei die folgenden Verfahrensschritte:
I) Zuführen der Substratbahnen, wobei während des Zuführens die Substratbahnen benachbart zueinander, bevorzugt im Wesentlichen deckungsgleich, angeordnet werden,
II) Umformen des Formsubstrats und des Foliensubstrats mit, bevorzugt gemeinsamen, Umformmitteln zu einer Rohrform, wobei das Formsubstrat ein äußeres Rohr und das Foliensubstrat ein inneres Rohr ausbildet, und wobei für das äußere Rohr und das innere Rohr eine Überlapp- oder Stoßanordnung der jeweiligen Längsrandseiten erzeugt wird,
III) Führen der Längsrandseiten des Formsubstrats und des Foliensubstrats, zwischen einem äußeren und einem inneren, bevorzugt umlaufend angetriebenen, Kontaktband,
IV) Erwärmen der Längsrandseiten des Formsubstrats und des Foliensubstrats über eine innere und/oder äußere Heizeinrichtung, wobei eine erste Verbindung, bevorzugt Klebeverbindung, zwischen den Längsrandseiten des Formsubstrats und eine zweite Verbindung, bevorzugt Längsschweißnaht, zwischen den Längsrandseiten des Foliensubstrats ausgebildet wird.

Die vorliegende Erfindung hat in überraschender Weise erkannt, dass es möglich ist zwei Substratbahnen zusammen, bereits, bevorzugt im Wesentlichen deckungsgleich, aneinander angeordnet, dem Umformungsprozess zuzuführen, wobei ein Endlosrohr mit einem aus einem inneren Foliensubstrat bestehenden inneren Rohr und einem aus einem äußeren Formsubstrat bestehenden Außenrohr geformt wird. Durch die gemeinsame Formung des Formsubstrats und Foliensubstrat kann hiermit sowohl Produktionsaufwand reduziert werden, wodurch die Produktionstaktung gesteigert werden kann, als auch die Anordnung der Formsubstrat- und Foliensubstrat-Rohre aneinander besonders reproduzierbar und fehlerresistent ausgeführt werden.

Durch die gemeinsame Umformung der Substratbahnen, sowie die Ausbildung der Längsverbindungen am Formkörper, insbesondere Klebeverbindung, und am Folienkörper, insbesondere Schweißverbindung, wird außerdem erreicht, dass der Formkörper und der Folienkörper besonders formschlüssig aneinander angeordnet werden können, wobei durch die flächige Anlage des Form- und Foliensubstrat-Rohrs bereits eine gute Oberflächenhaftung zwischen den Rohren besteht, wodurch ein Verrutschen der Rohre in folgenden Bearbeitungsschritten verhindert wird und insbesondere die Dichtigkeit, mechanische und dynamische Stabilität des resultierenden Tubenkörpers besonders gut ausfällt. Dadurch, dass das Formsubstrat und Foliensubstrat nur an der jeweils eigenen Längskante verbunden werden, wird hierbei trotzdem gewährleistet, dass das Formsubstrat und Foliensubstrat nach abgeschlossener Benutzung, zum Beispiel nach vollständiger Entleerung einer den Tubenkörper umfassenden Verpackungstube, des Tubenkörpers, insbesondere sortenrein, voneinander getrennt werden können, um Rezyklierprozessen und/ oder Kompostierprozessen zugeführt zu werden.

Außerdem wurde erkannt, dass das Formsubstrat im erfindungsgemäßen Verfahren das Foliensubstrat während des Umformens stabilisiert, wodurch es vorteilhaft möglich ist das Foliensubstrat dünner auszulegen, als es möglich wäre wenn das Foliensubstrat eigenständig der Umformung zugeführt würde. In anderen Worten ausgedrückt wird die innere Substratbahn durch die äußere Substratbahnstabilisiert, wodurch die einzelnen Substratbahnen dünner ausgebildet werden können, als für die eigenständige Bearbeitung notwendig wäre. Hierdurch können besonders vorteilhaft Materialeinsparungen, insbesondere beim Foliensubstrat, erreicht werden, und Tubenkörper mit verhältnisweise geringer Wandstärke und hoher Flexibilität produziert werden, ohne dass das innere Foliensubstrat kollabiert. In einer besonders vorteilhaften Ausführung kann somit zum Beispiel ein rezyklierbares Formsubstrat, welches insbesondere wenigstens teilweise aus Kartonage oder Papier besteht und/oder celulosehaltig ist, mit einem, zum Beispiel aus einem thermoplastischen Polymer bestehenden, Foliensubstrat kombiniert werden, wobei das Foliensubstrat vorteilhaft dünner ausgebildet ist, als das Formsubstrat.

Als Formsubstrat und Foliensubstrat sind dabei, insbesondere zunächst bogenförmige, Substratbahnen zu verstehen, welche bevorzugt aus unterschiedlichen Materialien oder Materialmischungen bestehen, wobei grundsätzlich zum Beispiel auch denkbar ist, dass die Substratbahnen aus wenigstens teilweise gleichen Materialmischungen bestehen. Die Auswahl des Formsubstrats und Foliensubstrats kann vorteilhaft an einen zu verpackenden oder zu bevorratenden Stoff angepasst werden.

Das Formsubstrat ist dabei bevorzugt faserhaltig und/oder celulosehaltig oder faserhaltige Bestandteile aufweisend, weiter bevorzugt aus einem rezyklierbaren Material bestehend, wie zum Beispiel aber nicht beschränkt auf Kartonage oder Papier. Das Formsubstrat stellt dabei insbesondere die mechanische, statische und/oder dynamische Stabilität der Tubenkörper bereit, wobei besonders bevorzugt die Stabilität des Formsubstrats eine positive Verstärkung der Stabilität des Foliensubstrats während und/oder nach dem Herstellungsprozess, zum Beispiel während Weiterbearbeitung, Befüllung und/oder der Benutzung, der Tubenkörper bewirkt. Weiter bevorzugt kann das Formsubstrat eine, insbesondere wasserabweisende, Beschichtung umfassen, welche vorteilhaft zum Beispiel durch eine Bedruckung, Kaschierung oder Lackierung ausgebildet wird, wobei auch andere Beschichtungen wie zum Beispiel Folien oder bedampfte Schichten möglich sind.

Das Foliensubstrat weist wenigstens eine verschweißbare Kunststoffschicht auf oder besteht aus einer solchen, und kann zum Beispiel aus einem Thermoplast, einem Elastomer, oder einem thermoplastischen Elastomer gefertigt werden, wobei als Material zum Beispiel Polypropylen, Polyethylen, Polyethylenterephthalat, Polymere aus biologischen Quellen, biologisch abbaubare Polymere, Cycloolefin-Copolymere, Polyurethan, oder Laminate, zum Beispiel mit Sperrschichten aus Ethylen-Vinylalkohol-Copolymer oder Polyamid, sowie mit metallisierten oder oxidisch bedampften Schichten möglich sind und/oder Mischungen bzw. Kombinationen dieser Materialien. Das Foliensubstrat kann vorteilhaft als mehrschichtige Struktur ausgebildet sein und ist bevorzugt an sich oder zumindest an seiner dem zu bevorratendem Stoff letztendlich zugewandten Seite wasserfest ausgeführt. Gegebenenfalls kann die Wasserfestigkeit auch durch eine Beschichtung des Foliensubstrats erreicht werden.

Die Substratbahnen werden bevorzugt im Wesentlichen deckungsgleich angeordnet, wobei sowohl denkbar ist, dass die Substratbahnen annähernd zentriert angeordnet sind oder, dass eine Substratbahn leicht versetzt auf der anderen Substratbahn angeordnet ist. Die Substratbahnen können dabei bereits vorläufig aneinander angeordnet zugeführt werden oder einzeln zugeführt werden, zum Beispiel um vorausgehende Behandlungs- und/oder Bearbeitungsschritte zu ermöglichen und erst unmittelbar vor dem Umformen zusammengeführt werden.

Die Umformmittel können vorteilhaft zum Beispiel als Dorn ausgebildet sein, wobei die Substratbahnen insbesondere als zwei Endlosrohre angeordnet werden, wobei das Formsubstrat ein äußeres Endlosrohr bildet und das Foliensubstrat ein inneres Endlosrohr. Besonders bevorzugt werden die Längsrandseiten der Substratbahnen innerhalb einer Substratbahn überlappend angeordnet, wobei eine Anordnung auf Stoß ebenso denkbar ist. Die Längsrandseiten der Substratbahnen müssen dabei auch nicht gleichartig angeordnet sein, zum Beispiel kann auch eine Substratbahn auf Stoß angeordnet sein und eine Substratbahn überlappend.

Das Erwärmen der Längsrandseiten des Foliensubstrats und Formsubstrats wird durch eine oder mehrere Heizeinrichtungen, bevorzugt Induktionsheizeichrichtungen, bewirkt, wobei weiter bevorzugt dem inneren Kontaktband eine Heizeinrichtung und dem äußeren Kontaktband eine Heizeinrichtung zugeordnet ist. Somit können die Längsrandseiten des Formsubstrats und des Foliensubstrats vorteilhaft beheizt werden während sie zwischen dem äußeren und inneren Kontaktband geführt und/oder transportiert werden, wobei vorteilhaft die Längsrandseiten zusätzlich mit Druck beaufschlagt werden.

Die Verbindung der Längsrandseiten des Formsubstrats wird bevorzugt als Klebeverbindung ausgebildet, besonders bevorzugt als Heißklebeverbindung, wobei grundsätzlich andere Verbindungsarten denkbar sind, wie zum Beispiel Schweißverbindungen, bevorzugt zum Beispiel durch verschweißen und/oder versiegeln mit einem oder mehreren zusätzlichen Substratstreifen, oder Prägeverbindungen. Die Verbindung der Längsrandseiten des Foliensubstrats wird bevorzugt als Schweißverbindung ausgebildet, wobei auch hier andere Verbindungsarten möglich sind, zum Beispiel eine Klebeverbindung. Die erste Verbindung am Formsubstrat und die zweite Verbindung am Foliensubstrat kann bevorzugt wenigstens annähernd oder vollkommen gleichzeitig stattfinden. Alternativ oder zusätzlich zu den Verbindungen an den jeweiligen Substratbahnen ist es ebenso möglich die innere und äußere Substratbahn direkt miteinander zu verbinden zum Beispiel als thermisch verschweißte Verbindung durch Siegelbacken oder Ultraschallverfahren wobei auch andere Verfahren denkbar sind, sowie durch gezieltes oder ungezieltes elektrostatisches Aufladen.

Die Seite des Formkörpers welche vor der Umformung von dem Foliensubstrat abgewandt angeordnet ist und nach der Umformung außen an dem geformten Endlosrohr des Formsubstrats angeordnet ist, soll im Folgenden als äußere Seite des Formkörpers definiert werden. Ebenso soll die Seite des Foliensubstrats welche vor der Umformung dem Formsubstrat zugewandt ist und nach dem Umformen auf der äußeren Seite des Endlosrohres des Foliensubstrates angeordnet ist, als äußere Seite des Foliensubstrats definiert werden. In Bezug auf das Endlosrohr und den Tubenkörper wird das innere Rohr oder das innere Rohrstück als das Rohr welches aus Foliensubstrat gebildet wird verstanden und das äußere Rohr oder äußere Rohrstück als das Rohr welches aus dem Formsubstrat gebildet wird.

Gemäß einer ersten vorteilhaften Ausführungsform kann vorgesehen sein, dass beim Erwärmen der Längsrandseiten zunächst ein Anhaften der Längsrandseiten des Foliensubstrats aneinander oder aufeinander erreicht wird, bevor die Verbindung des Formsubstrats ausgebildet wird. Hierdurch kann vorteilhaft erreicht werden, dass das Formsubstrat, insbesondere im Bereich der ersten und zweiten Verbindung, besonders passend, bevorzugt formschlüssig, an das Foliensubstrat angeordnet wird. Besonders vorteilhaft kann somit die Verbindung des Formsubstrats zum Beispiel auch unter Beaufschlagung mit Druck ausgebildet werden, ohne, dass die Verbindung des Foliensubstrates hiervon negativ beeinflusst wird, insbesondere ohne, dass sich die zweite, am Foliensubstrat ausgebildete, Verbindung verschiebt oder sogar löst.

Gemäß einer weiteren vorteilhaften Ausführungsform kann vorgesehen sein, dass an wenigstens einer Längsrandseite des Formsubstrats, bevorzugt vor dem Umformen, Haftvermittler, bevorzugt thermoplastischer Kleber, aufgetragen wird. Diese Ausführung hat sich als besonders vorteilhaft für die Ausbildung einer Klebeverbindung an den Längsrandseiten des Formsubstrats herausgestellt, wobei der Haftvermittler bevorzugt vor dem Umformen aufgetragen wird und durch die Umformung des Formsubstrats automatisch zwischen den Längsrandseiten angeordnet wird. In einer alternativen Ausführung kann der Haftvermittler auch während oder nach dem Umformen der Substratbahnen aufgetragen werden. Der Haftvermittler kann hierbei für eine überlappende Anordnung der Längsrandseiten mit einem definierten Abstand zum Rand der Längsrandseiten aufgetragen werden, oder für eine Anordnung auf Stoß direkt am Rand, vorteilhaft wenigstens teilweise über den Rand hinausragend, angeordnet sein. Die Verwendung von einem thermoplastischen Kleber wird hierbei bevorzugt, da sie sich besonders vorteilhaft in etablierte Heiz- und Kühlprozesse bei der Produktion von Tubenkörpern integrieren lässt.

Gemäß einer weiteren vorteilhaften Ausführungsform kann vorgesehen sein, dass auf das Formsubstrat und/oder das Foliensubstrat, bevorzugt punktuell und/oder blockartig, wenigstens ein Haftvermittler derart aufgetragen wird, so dass dieser zwischen Formsubstrat und Foliensubstrat angeordnet ist und während des Zuführens oder beim Umformen ein Anhaften zwischen Formsubstrat und Foliensubstrat bewirkt, wodurch ein Verrutschen des Foliensubstrats gegenüber dem Formsubstrat verhindert wird. Hierdurch wird vorteilhaft ein Verrutschen der Substratbahnen gegeneinander vor und während der Umformung und Ausbildung der Verbindungen verhindert, wobei besonders vorteilhaft auch ein Ablösen der Substratbahnen voneinander in den abgeteilten Tubenkörpern verhindert wird. Der Haftvermittler wird dabei bevorzugt punktuell aufgetragen, wobei alternativ ebenso möglich ist den Haftvermittler in Linien, Bahnen, Blöcken oder flächig, gegebenenfalls großflächig, sowie in mehreren verschiedenen Ausführungen, aufzutragen.

Gemäß einer weiteren vorteilhaften Ausführungsform kann vorgesehen sein, dass nach dem Herstellen der Verbindungen der Längsrandseiten des Formsubstrats und des Foliensubstrats ein Aushärtungsprozess des Haftvermittlers zwischen dem Formsubstrat und Foliensubstrat noch andauert. Hierdurch wird vorteilhaft eine Restbeweglichkeit, sowohl während als auch nach dem Umformen, des Formsubstrats und Foliensubstrats gegeneinander bewahrt, welche das Anordnen der Längsrandseiten der jeweiligen Substratbahnen erleichtert und insbesondere Knickbildungen und Verziehungen in den Substratbahnen vorbeugt.

Gemäß einer weiteren vorteilhaften Ausführungsform kann vorgesehen sein, dass zwischen dem Formsubstrat und Foliensubstrat eingesetzte Haftvermittler restlos entfernbar sind. Hierdurch können das Formsubstrat und das Foliensubstrat vorteilhaft, zum Beispiel nach vollständiger Entleerung einer den Tubenkörper umfassenden Verpackungstube, insbesondere sortenrein, voneinander getrennt werden.

Gemäß einer weiteren vorteilhaften Ausführungsform kann vorgesehen sein, dass der Haftvermittler zwischen dem Formsubstrat und Foliensubstrat in Abhängigkeit eines, auf der Außenseite des Formsubstrats befindlichen Druckbildes aufgebracht wird. Somit wird besonders vorteilhaft erreicht, dass der Haftvermittler optisch gänzlich oder fast vollständig unsichtbar ist, wodurch besonders bei Formsubstraten, wie zum Beispiel Papier, welche zu Fleckbildung mit, insbesondere flüssigen, Klebeemulsionen neigen, optische Nachteile auf der äußeren Seite des Formsubstrats verhindert werden.

Gemäß einer weiteren vorteilhaften Ausführungsform kann vorgesehen sein, dass die Haftvermittler an der Längsseite des Formsubstrats vor oder nach oder wenigstens annähernd zeitgleich zu den Haftvermittlern zwischen dem Formsubstrat und dem Foliensubstrat aufgetragen werden. Hierdurch kann das Auftragen der Haftvermittler auf verschiedene Weise vorgenommen werden wodurch es besonders vorteilhaft in bestehende Produktionsprozesse eingebunden werden kann. Ein bevorzugt gleichzeitiges Aufbringen kann dabei zum Beispiel die Produktionskette zeitlich und räumlich verkürzen, wobei ein Aufbringen welches bevorzugt nacheinander stattfindet keine Parallelisierung der Verfahrensschritte erfordert.

Gemäß einer weiteren vorteilhaften Ausführungsform kann vorgesehen sein, dass nach dem Erwärmen und nach dem Ausbilden der Verbindungen zwischen den Längsrandseiten das äußere Rohr und das innere Rohr gleichzeitig und/oder zusammen, bevorzugt unter Ausbildung von Rohrstücken mit gleicher Länge in Längsrichtung, vereinzelt werden. Das aus dem Formsubstrat und Foliensubstrat bestehende Endlosrohr wird somit vorteilhaft für weitere Bearbeitungsschritte zugänglich. Das Vereinzeln der Rohre findet dabei bevorzugt zum Beispiel durch Schneiden oder Ablängen statt. Vor der Vereinzelung können noch weitere Bearbeitungsschritte vorgesehen werden, zum Beispiel kann auf das Endlosrohr noch zur Verbesserung der Rundheit eingewirkt werden.

Gemäß einer weiteren vorteilhaften Ausführungsform kann vorgesehen sein, dass vereinzelte Paare von Rohrstücken, umfassend ein inneres und ein äußeres Rohrstück, gemeinsam, bevorzugt in Längsrichtung vollständig überlappend, weitertransportiert und an eine Kopfverbindungsvorrichtung übergeben werden. Hierdurch kann das Verfahren besonders vorteilhaft in einen, bevorzugt automatisierten, Produktionsprozess zur Herstellung einer Verpackungstube integriert werden.

Gemäß einer weiteren vorteilhaften Ausführungsform kann vorgesehen sein, dass das Foliensubstrat und das Formsubstrat von zwei getrennten Substratabrollvorrichtungen, bevorzugt von getrennten Substratrollen zugeführt wird. Durch die Zuführung von getrennten Substratrollvorrichtungen können besonders vorteilhaft Bearbeitungsschritte welche nur für eine Substratbahn angewendet werden sollen, zum Beispiel ein bevorzugtes Auftragen von Haftvermittlern im Bereich der Längsrandseite des Formsubstrats, umgesetzt werden, bevor die Substratbahnen zusammengeführt werden.

Gemäß einer weiteren vorteilhaften Ausführungsform kann vorgesehen sein, dass das Zusammenführen des Formsubstrats mit dem Foliensubstrat unter Druck stattfindet, bevorzugt 0.5 bis 5 bar. Hierdurch wird die Anlage von Formsubstrat und Foliensubstrat besonders stabil, wobei insbesondere eine Blasenbildung zwischen den Substratbahnen verhindert wird. Weiterhin wird durch die Zusammenführung unter Druck verhindert, dass die Substratbahnen verrutschen, bevor ein bevorzugt aufgetragener Haftvermittler ausreichend ausgehärtet ist, um ein Verrutschen zu verhindern.

Gemäß einer weiteren vorteilhaften Ausführungsform kann vorgesehen sein, dass das innere Kontaktband auf 140 bis 220°C erwärmt wird. Dieser Temperaturbereich hat sich als besonders vorteilhaft herausgestellt, um, bevorzugt in Kombination mit dem äußeren Kontaktband, genügend Energie für die Ausbildung der ersten und zweiten Verbindungen, bereitzustellen, wobei gleichzeitig ein Überhitzen des inneren Kontaktbandes, welches sowohl die Lebensdauer des inneren Kontaktbandes reduzieren würde, als auch zu ungewünschter negativer Beeinflussung des Materials der Substratbahnen führen kann, verhindert wird.

Gemäß einer weiteren vorteilhaften Ausführungsform kann vorgesehen sein, dass das äußere Kontaktband auf 110 bis 180°C erwärmt wird. Dieser Temperaturbereich hat sich, bevorzugt in Kombination mit dem inneren Kontaktband, als besonders vorteilhaft herausgestellt um insgesamt genügend Energie für die Ausbildung der ersten und zweiten Verbindung bereitzustellen, ohne dass eine Überhitzung der Kontaktbänder oder der Substratbahnen stattfindet.

Gemäß einer weiteren vorteilhaften Ausführungsform kann vorgesehen sein, dass das aus dem Formsubstrat und Foliensubstrat bestehende Rohr und/oder die Längsverbindungen, nach Ausbildung der Längsverbindungen, auf unter 90°C, bevorzugt unter 80°C, besonders bevorzugt unter 70°C, gekühlt wird. Hierdurch kann vorteilhaft erreicht werden, dass die Substratbahnen und/oder die Längsverbindungen nach ihrer Ausbildung gefestigt und stabilisiert werden, wodurch insbesondere bei einer folgenden Vereinzelung des Endlosrohrs zu Tubenkörpern ein Lösen der Verbindung verhindert wird, sowie ein Nachgeben oder Einsinken der Tubenkörper, insbesondere im Trennbereich.

Gemäß einer weiteren vorteilhaften Ausführungsform kann vorgesehen sein, dass beim Zuführen das Formsubstrat und das Foliensubstrat in einer senkrecht zur Längsrichtung verlaufenden Breitenrichtung mit wenigstens annähernd gleich großer Breite zugeführt und/oder zugeschnitten wird, oder dass das Foliensubstrat in seiner Breitenrichtung kürzer als das Formsubstrat zugeführt wird, oder andersherum. Durch die Zuführung der Substratbahnen in gleicher Breite wird die, bevorzugt weitestgehend deckungsgleiche, Anordnung der Substratbahnen besonders erleichtert, da die Substratbahnen insbesondere völlig deckungsgleich angeordnet werden können. Eine in Breitenrichtung kürzere Ausführung des Foliensubstrats kann vorteilhaft eine Materialeinsparung bewirken, wobei durch den kleineren Umfang des inneren Rohres die Längsrandverbindung des Foliensubstrats nicht negativ beeinflusst wird. Besonders vorteilhaft wird durch diese Ausführung eine größere Fläche für die Verbindung des Formsubstrats ermöglicht, bevorzugt zum Beispiel für eine Klebeverbindung, wodurch die Stabilität der Verbindung verbessert wird, wobei die Verbindung des Foliensubstrats, zum Beispiel eine Schweißverbindung, gleichermaßen stabil bleibt.

Gemäß einer weiteren vorteilhaften Ausführungsform kann vorgesehen sein, dass wenigstens ein, bevorzugt wenigstens zwei, besonders bevorzugt mehr als zwei, weitere/r Substratstreifen, insbesondere Verstärkungsstreifen, und/oder Materialzusatz/Materialzusätze im Bereich der ersten und/oder zweiten Verbindung angeordnet wird/werden, welche/r zumindest abschnittsweise mit den Längsrandseiten verbunden, insbesondere verschweißt wird/werden. Die Substratstreifen können dabei aus dem gleichen Material wie das Foliensubstrat oder aus einem anderen, bevorzugt verschweißbaren und/oder verklebbaren, Material bestehen. Der wenigstens eine Materialzusatz kann zum Beispiel ebenso als Streifen eingebracht werden oder als flüssiges Material. Die Substratstreifen und/oder Materialzusätze können gleichartig oder andersartig ausgebildet sein, zum Beispiel mit unterschiedlichen Materialstärken. Alternativ zu einem Verschweißen können die Substratstreifen oder Materialzusätze auch wenigstens abschnittsweise mit den Längsrandseiten verklebt werden. Durch die Substratstreifen und/oder Materialzusätze kann die dynamische und statische Stabilität der Verbindungen vorteilhaft verstärkt werden und zum Beispiel die Dichtigkeit weiter verbessert werden. Ebenso wird durch die Substratstreifen und/oder Materialzusätze eine Vielzahl von Anordnungen der Längsrandseiten des Folien- und Formsubstrats ermöglicht, wobei die Stabilität und Dichtigkeit der Verbindungen gewährleistet bleibt. Besonders vorteilhaft können die Substratstreifen und/oder Materialzusätze als Haftvermittler die Ausbildung der ersten und/oder zweiten Verbindung gewährleisten oder unterstützen. Eine Beispielhafte Ausführungsform für die zugeführten Substratstreifen und/oder Materialzusätze findet sich zum Beispiel in der EP 3 880 445 B1 und der EP 4 140 705 A1 der Anmelderin, wobei auch andere Ausführungsformen möglich sind.

Gemäß einer weiteren vorteilhaften Ausführungsform kann vorgesehen sein, dass die Umformung des Formsubstrats in Relation zu der Umformung des Foliensubstrats, entlang der Längsrichtung versetzt, insbesondere später, beginnt, wobei die Umformung des Foliensubstrats zusätzlich zu den Umformmitteln durch Niederhaltemittel bewirkt wird. In anderen Worten ausgedrückt beginnt die Umformung des Formsubstrats also in Bezug auf die Längsrichtung, entlang welcher die Umformung der Substratbahnen stattfindet, an einer späteren Position als die Umformung des Foliensubstrats. Hierdurch besteht an dem aus dem Foliensubstrat bestehenden inneren Rohr ein definierter Bereich, an dem es während der Umformung (noch) nicht durch das äußere Rohr umschlossen ist, wodurch hier besonders vorteilhaft das Zuführen von zusätzlichen Substratstreifen und/oder Materialzusätzen stattfinden kann.

Gemäß einer weiteren vorteilhaften Ausführungsform kann vorgesehen sein, dass das Formsubstrat und das Foliensubstrat nach Passieren von Einlaufrollen wenigstens teilweise voneinander beabstandet geführt werden, insbesondere um 0° bis 15° konvergierend verlaufend geführt werden, wobei das Formsubstrat und das Foliensubstrat bei Beginn der Umformung, bevorzugt unmittelbar, benachbart zueinander, weiter bevorzugt im Wesentlichen deckungsgleich, angeordnet sind. Diese Art der Führung hat sich als besonders vorteilhaft herausgestellt, um eine deckungsgleiche Anordnung der Substratbahnen zu erreichen ohne Verschiebungen, Verzerrungen oder Faltenbildungen in den Substratbahnen.

Gemäß einer weiteren vorteilhaften Ausführungsform kann vorgesehen sein, dass das Formsubstrat und/oder das Foliensubstrat vor dem Umformen von einer Zuschnittvorrichtung zugeschnitten werden. Diese Art des Zuschneidens wird auch als "(Side-)Trimming" bezeichnet. Hierdurch können verschiedene vorteilhafte Wirkungen erreicht werden, zum Beispiel können die Substratbahnen unmittelbar aneinander angepasst werden und verschiedene Anordnungen der Substratbahnen durch entsprechende Zuschneidungen bewirkt werden.

Gemäß einer weiteren vorteilhaften Ausführungsform kann vorgesehen sein, dass das Formsubstrat und/oder das Foliensubstrat vor dem Ausbilden der ersten und zweiten Verbindung so zugeschnitten wird, dass die Längsrandseiten bei dem äußeren Rohr und/oder inneren Rohr radial nur im Bereich der Außenseite mit zumindest einer durch die Zuschneidung gebildeten Spitze, insbesondere auf Stoß, aneinander liegen. Diese Ausführung hat verschiedene Vorteile, unter anderem kann vorteilhaft für die Ausbildung der ersten Verbindung eine verhältnisweise geringe Energiebeaufschlagung ausreichen, wodurch sichergestellt wird, dass eine mögliche Bedruckung unbeschädigt bleibt, insbesondere ohne Rissbildung. Eine beispielhafte Ausführung wird zum Beispiel in der EP 3 880 445 B1 der Anmelderin gezeigt, wobei auch andere Ausführungen möglich sind. Besonders vorteilhaft kann diese Ausführungsform mit zusätzlichen Substratstreifen und/oder Materialzusätzen verbunden werden.

Weiterhin wird die oben genannte Aufgabe durch einen flexiblen Tubenkörper gelöst, bevorzugt hergestellt nach einer der vorangehenden Ausführungsformen des Verfahrens, umfassend ein äußeres Tubenrohr, aus einem bevorzugt auf einer Außenseite eine Bedruckung aufweisenden, Formsubstrat, welches bevorzugt faserhaltig ist oder faserhaltige Bestandteile aufweist, und ein inneres Tubenrohr, aus einem Foliensubstrat, welches mindestens eine verschweißbare Kunststoffschicht aufweist oder aus dieser besteht, wobei eine erste Verbindung, bevorzugt Klebeverbindung, zwischen den Längsrandseiten des Formsubstrats und eine zweite Verbindung, bevorzugt Längsschweißnaht, zwischen den Längsrandseiten des Foliensubstrats ausgebildet ist.

Erfindungsgemäß sind die erste Verbindung und die zweite Verbindung, in Bezug auf die Längsachse des Tubenkörpers in radialer Richtung, bevorzugt bündig, insbesondere formschlüssig, wenigstens teilweise übereinander angeordnet oder nebeneinander angeordnet.

Als übereinander wird in diesem Zusammenhang definiert, dass die Konturen der Verbindungen, in Bezug auf die Längsachse des Tubenrohres, wenigstens teilweise auf einer gemeinsamen radialen Linie und/oder Ebene übereinander bzw. aufeinander folgend angeordnet sind. Als nebeneinander wird definiert, dass die Verbindungen, in Bezug auf die Längsachse des Tubenrohres, nicht auf einer gemeinsamen radialen Linie und/oder Ebene übereinander, sondern, bevorzugt unmittelbar, nebeneinander an einer gemeinsamen radialen Linie anliegend angeordnet sind, bzw. in Umfangsrichtung aufeinander folgend angeordnet sind.

Zur Vermeidung unnötiger Wiederholung wird im Hinblick auf die vorteilhaften Wirkungen, sowie die vorteilhaften Ausführungen des flexiblen Tubenkörpers auf das oben beschriebene Verfahren zur Herstellung eines Tubenkörpers verwiesen. Dies bedeutet auch, dass insgesamt verfahrensmäßig offenbarte Merkmale als vorrichtungsmäßig offenbart gelten sollen, und umgekehrt.

Zusammengefasst ermöglicht die vorliegende Erfindung, einen flexiblen Tubenkörper vorzuschlagen, welcher in einem Produktionsschritt aus zwei Substratbahnen hergestellt wird, wobei das Formsubstrat die Stabilität des Foliensubstrats positiv verstärkt.

Die Ausbildung der Verbindungen wenigstens teilweise übereinander hat sich dabei als besonders gut herstellbar herausgestellt, wobei die Anordnung auch vorteilhaft dazu führt, dass die Verbindungen wenigstens teilweise, bevorzugt formschlüssig, an ihrer Oberfläche aneinanderhaften. Die Anordnung der Verbindungen, insbesondere formschlüssig, nebeneinander bringt dabei den Vorteil mit sich, dass die Verbindungen insgesamt weniger Platz einnehmen, besonders, dass der durch die Verbindungen ausgebildete Nahtwulst dünner ausfällt.

Gemäß einer ersten vorteilhaften Ausführungsform kann vorgesehen sein, dass das Formsubstrat eine Materialstärke von 100 bis 200 g/m2 aufweist, bevorzugt 130 bis 170 g/m2. Diese Materialstärke hat sich als besonders vorteilhaft für das Formsubstrat herausgestellt, um die mechanische und dynamische Stabilität des Tubenkörpers bereitzustellen, wobei eine gute Flexibilität des Tubenkörpers erreicht wird.

Gemäß einer weiteren vorteilhaften Ausführungsform kann vorgesehen sein, dass das Foliensubstrat eine Materialdicke von 30 bis 150 µm aufweist, bevorzugt 50 bis 80 µm. Mit dieser Materialdicke weist das Foliensubstrat besonders gute Flexibilität und mechanische, sowie dynamische Stabilität, insbesondere im Verbund mit dem Formsubstrat, auf.

Gemäß einer weiteren vorteilhaften Ausführungsform kann vorgesehen sein, dass der erste Haftvermittler und/oder der zweite Haftvermittler und/oder weitere optionale Haftvermittler eine Schichtstärke von 1 bis 100 µm aufweisen. Diese Schichtstärke hat sich als besonders vorteilhaft herausgestellt um eine gute Stabilität zu gewährleisten, wobei die Trennbarkeit des Tubenkörpers und die Rezyklierbarkeit nicht beeinträchtigt werden.

Weiterhin wird die oben genannte Aufgabe durch eine Vorrichtung zur Herstellung von flexiblen Tubenkörpern gelöst, bevorzugt nach einer der vorangehenden Ausführungsformen des Verfahrens, insbesondere für die Herstellung von Tubenkörpern aus wenigstens zwei, bevorzugt getrennten, besonders bevorzugt unterschiedliche Materialien aufweisenden Substratbahnen, insbesondere aus einem, bevorzugt faserhaltigen oder faserhaltige Bestandteile aufweisenden, Formsubstrat welches eine sich in eine Längsrichtung erstreckende erste Längsrandseite und eine hierzu parallele und beabstandete zweite Längsrandseite umfasst, und einem Foliensubstrat, welches mindestens eine verschweißbare Kunststoffschicht aufweist oder aus dieser besteht, welches eine sich in eine Längsrichtung erstreckende erste Längsrandseite und eine hierzu parallele und beabstandete zweite Längsrandseite umfasst, wobei, bevorzugt gemeinsame, Umformmittel umfasst sind, welche derart eingerichtet sind, dass das Formsubstrat und das Foliensubstrat zu einer Rohrform geformt werden, wobei das Formsubstrat ein äußeres Rohr und das Foliensubstrat ein inneres Rohr ausbildet, und wobei das äußere Rohr und das innere Rohr eine

Überlapp- oder Stoßanordnung der jeweiligen Längsrandseiten aufweisen, wobei ein äußeres und ein inneres, bevorzugt umlaufend angetriebenes, Kontaktband derart angeordnet sind, dass die Längsrandseiten des Formsubstrats und des Foliensubstrats, zwischen dem äußeren und inneren Kontaktband geführt werden, und dass die Vorrichtung eine innere und/oder äußere Heizeinrichtung, umfasst, welche die Längsrandseiten des Formsubstrats und des Foliensubstrats derart erwärmt, dass eine erste Verbindung, bevorzugt Klebeverbindung, zwischen den Längsrandseiten des Formsubstrats und eine zweite Verbindung, bevorzugt Längsschweißnaht, zwischen den Längsrandseiten des Foliensubstrats ausgebildet wird, wobei die Vorrichtung wenigstens zwei getrennte Substratabrollvorrichtungen umfasst, welche für die Zuführung von zwei, bevorzugt getrennten, besonders bevorzugt unterschiedliche Materialien aufweisenden, Substratbahnen ausgebildet sind.

Zur Vermeidung unnötiger Wiederholung wird im Hinblick auf die vorteilhaften Wirkungen, sowie die Vorteilhaften Ausführungen der Vorrichtung zur Herstellung von flexiblen Tubenkörpern auf das oben beschriebene Verfahren zur Herstellung eines Tubenkörpers und den Tubenkörper hergestellt nach einem erfindungsgemäßen Verfahren verwiesen. Dies bedeutet auch, dass insgesamt verfahrensmäßig offenbarte Merkmale als vorrichtungsmäßig offenbart gelten sollen, und umgekehrt.

Zusammengefasst ermöglicht die vorliegende Erfindung, eine Vorrichtung zur Herstellung von flexiblen Tubenkörpern vorzuschlagen, welche in einem Produktionsschritt aus zwei Substratbahnen hergestellt werden, wobei das Formsubstrat die Stabilität des Foliensubstrats positiv verstärkt.

Die Zuführung aus wenigstens zwei Substratabrollvorrichtungen und folgende Umformung mit einem gemeinsamen Umformmittel hat sich als besonders vorteilhaft herausgestellt, da die unterschiedlichen Verfahrensschritte in der Vorrichtung derart besonders gut aufeinander abgestimmt werden können und in etablierte Produktionsketten eingefügt werden können.

Gemäß einer ersten vorteilhaften Ausführungsform kann vorgesehen sein, dass die Vorrichtung Einlaufrollen umfasst, welche derart angeordnet sind, dass die Substratbahnen während des Zuführens benachbart zueinander, bevorzugt im Wesentlichen deckungsgleich, angeordnet werden. Hiermit werden die Substratbahnen besonders vorteilhaft in die für die Umformung notwendige Anordnung überführt, wobei die Möglichkeit erhalten bleibt die Substratbahnen vor und während dem Zuführen noch zu bearbeiten, zum Beispiel Zuzuschneiden oder Haftvermittler aufzubringen.

Gemäß einer weiteren vorteilhaften Ausführungsform kann vorgesehen sein, dass die Vorrichtung wenigstens eine erste Düse umfasst, welche dazu ausgebildet ist auf das Formsubstrat und/oder das Foliensubstrat, wenigstens einen Haftvermittler, bevorzugt thermoplastischen Kleber, aufzutragen. Die Düse kann dabei mit einem Düsenauslass oder einer Vielzahl von Düsenauslässen ausgeführt sein und für das Aufbringen von Haftvermittlern in verschiedenen Anordnungen, zum Beispiel als Linie oder Blöcke, ausgeführt sein. Vorteilhaft ist die Düse in der Vorrichtung vor den Umformmitteln angeordnet, wobei auch andere Anordnungen, zum Beispiel den Umformmitteln nebengeordnet oder nachgeordnet möglich sind. Die Verwendung von einem thermoplastischen Kleber wird hierbei bevorzugt, da sie sich besonders vorteilhaft in etablierte Heiz- und Kühlprozesse bei der Produktion von Tubenkörpern integrieren lässt.

Gemäß einer weiteren vorteilhaften Ausführungsform kann vorgesehen sein, dass die Vorrichtung wenigstens eine zweite Düse, bevorzugt einen Düsenbalken, umfasst, welche dazu ausgebildet ist auf das Formsubstrat und/oder das Foliensubstrat, bevorzugt punktuell und/oder blockartig, wenigstens einen Haftvermittler aufzutragen. Die Düse kann dabei mit einem Düsenauslass oder einer Vielzahl von Düsenauslässen ausgeführt sein und für das Aufbringen von Haftvermittlern in verschiedenen Anordnungen, zum Beispiel als Linie, punktuell, Blöcke oder auch großflächig, ausgeführt sein. Vorteilhaft ist die Düse in der Vorrichtung vor den Umformmitteln angeordnet, wobei auch andere Anordnungen, zum Beispiel den Umformmitteln nebengeordnet oder nachgeordnet möglich sind.

Gemäß einer weiteren vorteilhaften Ausführungsform kann vorgesehen sein, dass den Umformmitteln Seitenrollen derart zugeordnet sind, dass das Formsubstrat und das Foliensubstrat durch die Seitenrollen um die Umformmittel herumgeformt werden. Die Seitenrollen begünstigen dabei besonders vorteilhaft, dass die Substratbahnen um das Umformmittel herumgeformt werden.

Gemäß einer weiteren vorteilhaften Ausführungsform kann vorgesehen sein, dass an der Vorrichtung Niederhaltemittel ausgebildet sind, welche derart angeordnet sind, dass sie das Foliensubstrat zusätzlich zu den Umformmitteln führen, insbesondere derart, dass die Umformung des Foliensubstrats entlang der Längsrichtung vor der Umformung des Formsubstrats beginnt. Anders ausgedrückt sind die Niederhaltemittel derart angeordnet, dass die Umformung des Formsubstrats in Bezug auf die Längsrichtung, entlang welcher die Umformung der Substratbahnen stattfindet, an einer späteren Position als die Umformung des Foliensubstrats beginnt. Hierdurch besteht an dem aus dem Foliensubstrat bestehenden inneren Rohr ein definierter Bereich, an dem es während der Umformung (noch) nicht durch das äußere Rohr umschlossen ist, wodurch hier besonders vorteilhaft das Zuführen von zusätzlichen Substratstreifen und/oder Materialzusätzen stattfinden kann.

Gemäß einer weiteren vorteilhaften Ausführungsform kann vorgesehen sein, dass wenigstens ein Zuführmittel derart angeordnet ist, dass wenigstens ein weiterer Substratstreifen, insbesondere Verstärkungsstreifen, und/oder Materialzusatz im Bereich der ersten und/oder zweiten Verbindung zugeführt wird. Die Substratstreifen können dabei aus dem gleichen Material wie das Foliensubstrat oder aus einem anderen, bevorzugt verschweißbaren Material bestehen. Der wenigstens eine Materialzusatz kann zum Beispiel ebenso als Streifen eingebracht werden oder als flüssiges Material. Die Substratstreifen und/oder Materialzusätze können gleichartig oder andersartig ausgebildet sein, zum Beispiel mit unterschiedlichen Materialstärken oder Längen. Durch die Substratstreifen und/oder Materialzusätze kann die dynamische und statische Stabilität der Verbindungen vorteilhaft verstärkt werden und zum Beispiel die Dichtigkeit weiter verbessert werden. Ebenso wird durch die Substratstreifen und/oder Materialzusätze eine Vielzahl von Anordnungen der Längsrandseiten des Folien- und Formsubstrats ermöglicht, wobei die Stabilität und Dichtigkeit der Verbindungen gewährleistet bleibt. Besonders vorteilhaft können die Substratstreifen und/oder Materialzusätze als Haftvermittler die Ausbildung der ersten und/oder zweiten Verbindung gewährleisten oder unterstützen. Eine Beispielhafte Ausführungsform für das zugeführte Substratstreifen und/oder Materialzusätze findet sich zum Beispiel in der EP 3 880 445 B1 und der EP 4 140 705 A1 der Anmelderin, wobei auch andere Ausführungsformen möglich sind. Dabei ist zum Beispiel aus denkbar, dass den Zuführmitteln Heizvorrichtungen zugeordnet sind, wodurch die Substratstreifen und/oder Materialzusätze temperiert werden. Ganz besonders vorteilhaft werden die Substratstreifen und/oder Materialzusätze, bevorzugt, wenigstens abschnittsweise mit den Längsrandseiten verbunden, insbesondere verschweißt oder verklebt.

Gemäß einer weiteren vorteilhaften Ausführungsform kann vorgesehen sein, dass die Einlaufrollen derart angeordnet sind, dass das Formsubstrat und das Foliensubstrat beim Passieren der letzten Einlaufrolle wenigstens teilweise voneinander beabstandet sind, insbesondere um 0 bis 15° konvergierend verlaufen, wobei das Formsubstrat und das Foliensubstrat bei Beginn der Umformung, bevorzugt unmittelbar, benachbart zueinander, weiter bevorzugt im Wesentlichen deckungsgleich, angeordnet sind. Diese Art der Führung hat sich als besonders vorteilhaft herausgestellt um eine deckungsgleiche Anordnung der Substratbahnen zu erreichen ohne Verschiebungen, Verzerrungen oder Faltenbildungen in den Substratbahnen.

Gemäß einer weiteren vorteilhaften Ausführungsform kann vorgesehen sein, dass die Vorrichtung wenigstens eine Schnittvorrichtung, bevorzugt eine für jede verwendete Substratbahn und/oder Substratstreifen und/oder Materialzusätze, insbesondere zum Zuschneiden der Substratbahnen vor der Umformung, umfasst. Diese Art des Zuschneidens wird auch als "(Side-)Trimming" bezeichnet. Hierdurch können verschiedene vorteilhafte Wirkungen erreicht werden, zum Beispiel können die Substratbahnen unmittelbar aneinander angepasst werden und verschiedene Anordnungen der Substratbahnen durch entsprechende Zuschneidungen bewirkt werden.

Gemäß einer weiteren vorteilhaften Ausführungsform kann vorgesehen sein, dass die Vorrichtung eine Kühlvorrichtung umfasst, welche derart eingerichtet ist, dass das aus dem Formsubstrat (1) und Foliensubstrat (2) bestehende Rohr und/oder die Längsverbindungen (15, 16), nach Ausbildung der Längsverbindungen (15, 16), auf unter 90°C, bevorzugt unter 80°C, besonders bevorzugt unter 70°C, gekühlt wird. Hierdurch kann vorteilhaft erreicht werden, dass die Substratbahnen und die Längsverbindungen nach ihrer Ausbildung gefestigt und stabilisiert werden, wodurch insbesondere bei einer folgenden Vereinzelung des Endlosrohrs zu Tubenkörpern ein Lösen der Verbindung verhindert wird, sowie ein Nachgeben oder Einsinken der Tubenkörper, insbesondere im Trennbereich.

Nachfolgend wird die vorliegende Erfindung anhand von lediglich schematischen, beispielhafte Ausführungsformen der Erfindung zeigenden Zeichnungen näher erläutert.
Fig. 1: eine schematische Seitenansicht der Ausführung des erfindungsgemäßen Verfahrens, mit einer schematisch dargestellten Vorrichtung zur Herstellung eines erfindungsgemäßen Tubenkörpers, in einer ersten Ausführungsform
Fig. 2a: eine schematische Aufsicht der Ausführung des erfindungsgemäßen Umformens, mit einem schematisch dargestellten Umformmittel, in einer ersten Ausführungsform
Fig. 2b: eine schematische Seitenansicht der Ausführung des erfindungsgemäßen Umformens, mit einem schematisch dargestellten Umformmittel, in einer ersten Ausführungsform
Fig. 3a: eine schematische Aufsicht der Ausführung des erfindungsgemäßen Umformens, mit einem schematisch dargestellten Umformmittel, in einer zweiten Ausführungsform
Fig. 3b: eine schematische Seitenansicht der Ausführung des erfindungsgemäßen Umformens, mit einem schematisch dargestellten Umformmittel, in einer zweiten Ausführungsform
Fig. 4a: eine schematische Querschnittsansicht einer Anordnung der Längsrandseiten der Substratbahnen nach dem Umformen, in einer ersten Ausführungsform
Fig. 4b: eine schematische Querschnittsansicht einer Anordnung der Längsrandseiten der Substratbahnen nach dem Herstellen der Verbindungen, in einer ersten Ausführungsform
Fig. 5a: eine schematische Querschnittsansicht einer Anordnung der Längsrandseiten der Substratbahnen nach dem Umformen, in einer zweiten Ausführungsform
Fig. 5b: eine schematische Querschnittsansicht einer Anordnung der Längsrandseiten der Substratbahnen nach dem Herstellen der Verbindungen, in einer zweiten Ausführungsform
Fig. 6a: eine schematische Querschnittsansicht einer Anordnung der Längsrandseiten der Substratbahnen nach dem Umformen, in einer dritten Ausführungsform
Fig. 6b: eine schematische Querschnittsansicht einer Anordnung der Längsrandseiten der Substratbahnen nach dem Umformen, in einer vierten Ausführungsform
Fig. 6c: eine schematische Querschnittsansicht einer Anordnung der Längsrandseiten der Substratbahnen nach dem Umformen, in einer fünften Ausführungsform
Fig. 6d: eine schematische Querschnittsansicht einer Anordnung der Längsrandseiten der Substratbahnen nach dem Umformen, in einer sechsten Ausführungsform
Fig. 7: eine perspektivische Ansicht der Substratbahn des Formsubstrats vor einer Umformung, in einer ersten Ausführungsform
Fig. 8: eine schematische Darstellung einer Verfahrensführung eines erfindungsgemäßen Verfahrens in einer ersten Ausführungsform

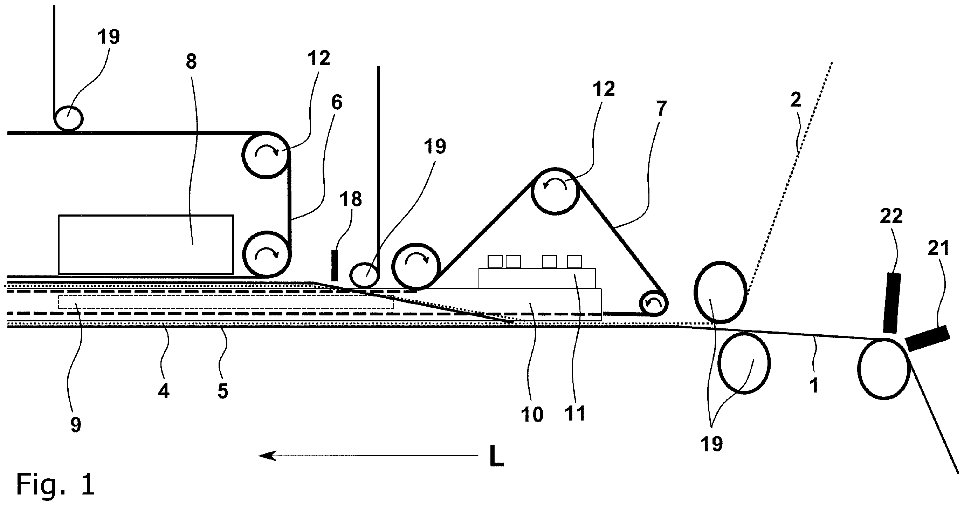

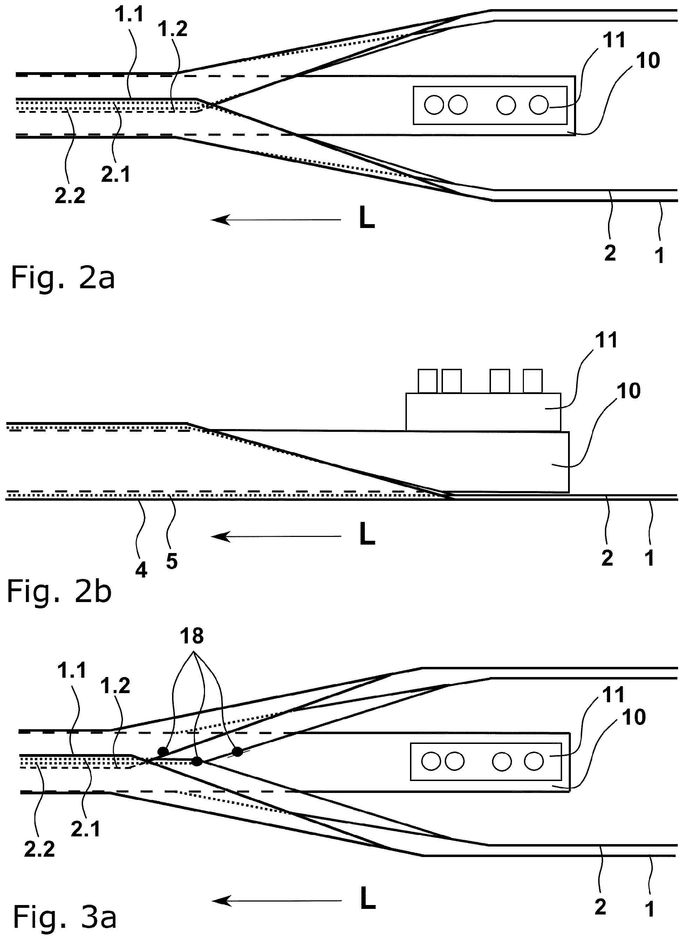

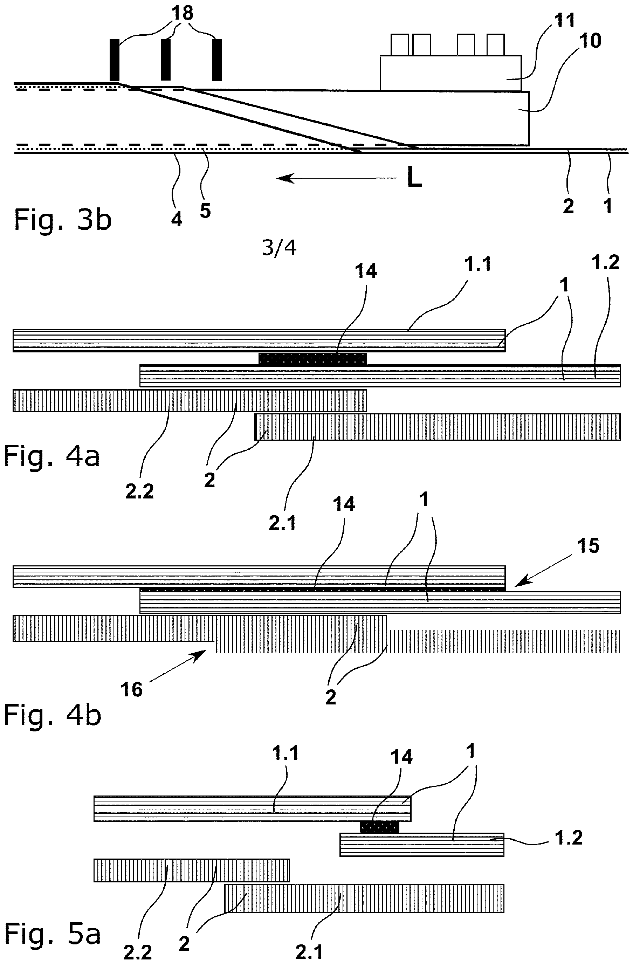

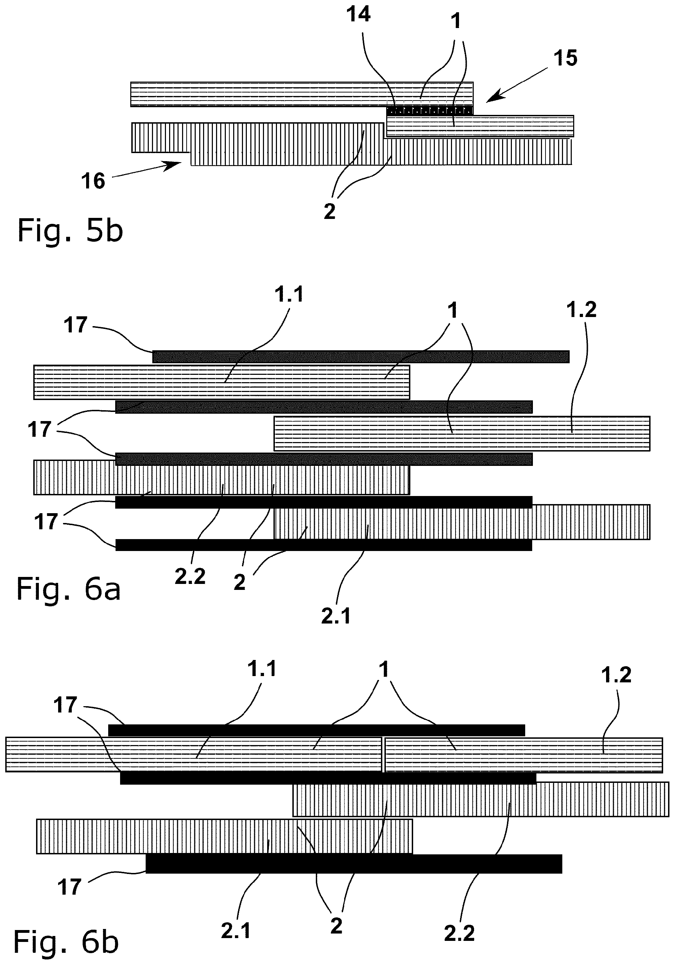

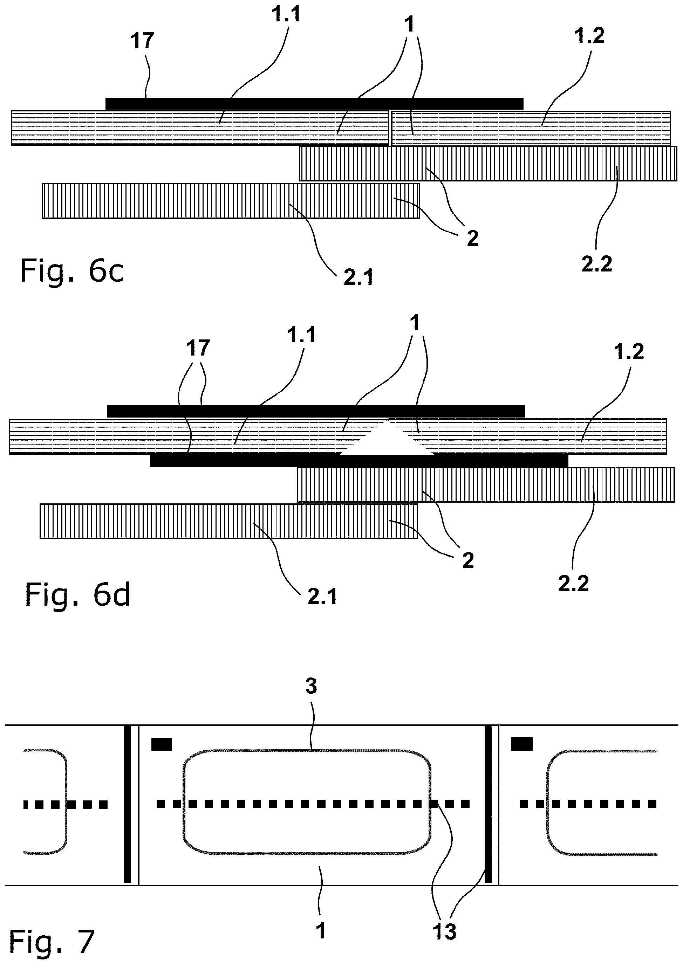

In der Fig. 1 wird eine erste Ausführungsform des erfindungsgemäßen Verfahrens mit einer schematisch dargestellten Vorrichtung zur Herstellung von erfindungsgemäßen Tubenkörpern gezeigt. Hierbei werden Substratbahnen eines Formsubstrats 1 und eines Foliensubstrats 2 durch Einlaufrollen 19 zusammengeführt, wobei die Einlaufrollen 19 derart angeordnet sind, dass das Formsubstrat 1 und das Foliensubstrat 2 beim Passieren der letzten Einlaufrolle 19 wenigstens teilweise voneinander beabstandet sind, insbesondere um 0 bis 15° konvergierend verlaufen, wonach die Substratbahnen insbesondere weitestgehend deckungsgleich angeordnet sind, wobei die Substratbahnen bevorzugt aus verschiedenen Materialen bestehen. Bevorzugt ist das Formsubstrat 1 faserhaltig oder weist faserhaltige Bestandteile auf, und insbesondere wenigstens auf einer Seite eine Bedruckung 3 (vgl. Fig. 7). Weiter bevorzugt weist das Foliensubstrat 2 wenigstens eine verschweißbare Kunststoffschicht auf oder besteht aus einer solchen. Die Substratbahnen werden von getrennten Substratabrollvorrichtungen, bevorzugt Substratrollen, zugeführt, oder werden bereits aneinander angeordnet zugeführt. Auf der inneren Seite des Formsubstrats 1 wird vor dem Zusammenführen bevorzugt wenigstens ein erster Haftvermittler 13 (vgl. Fig. 3) durch eine Düse 21 aufgetragen. Besonders bevorzugt wird auf dem Formsubstrat 1 wenigstens ein zweiter Haftvermittler 14 aufgetragen (vgl. Fig. 4a, b und Fig. 5a, b) durch eine Düse 22. Die Düsen 21 und 22 können dabei mit nur einem oder einer Mehrzahl von Düsenauslässen ausgebildet sein und verschiedene Anordnungen der Haftvermittler umsetzen, wie zum Beispiel linienförmig, punktuell oder blockartig. Die Substratbahnen werden mit einem Umformmittel 10, zum Beispiel als Dorn ausgebildet, in eine Rohrform umgeformt, insbesondere ein Endlosrohr, wobei das Foliensubstrat 2 ein inneres Rohr 4 ausbildet, mit bevorzugt überlappend oder auf Stoß angeordneten Längsrandseiten 2.1, 2.2, und wobei das Formsubstrat 1 ein äußeres Rohr 5 ausbildet, ebenfalls mit bevorzugt überlappend oder auf Stoß angeordneten Längsrandseiten 1.1, 1.2. Die Vorrichtung kann Niederhaltemittel 18 umfassen, welche vorteilhaft bewirken können, dass das Foliensubstrat 2 in Bezug auf die Längsrichtung L vor dem Formsubstrat 1 umgeformt wird, wodurch besonders einfach zusätzliche Substratstreifen 17 und/oder Materialzusätze durch Zuführmittel an den Substratbahnen, insbesondere an der ersten und/oder zweiten Verbindung 15, 16, angeordnet werden können. Die Längsrandseiten 1.1, 1.2, 2.1, 2.2 der Substratbahnen werden zwischen einem äußeren Kontaktband 6 und einem inneren Kontaktband 7 geführt, welches durch Antriebsmittel 12, zum Beispiel Antriebsrollen, umlaufangetrieben ist. Weiterhin ist eine innere Heizeinrichtung 9 und eine äußere Heizeinrichtung 8 vorgesehen, welche das Formsubstrat 1 und das Foliensubstrat 2 heizen, wobei eine erste Verbindung 15, bevorzugt eine Klebeverbindung, weiter bevorzugt eine, durch einen vorteilhaft als thermoplastischer Kleber ausgebildeten, Haftvermittler 14 vermittelte Klebeverbindung oder durch einen Substratstreifen 17 vermittelte Klebe oder Schweißverbindung, am Formsubstrat 1 ausgebildet wird und eine zweite Verbindung 16, insbesondere Schweißverbindung, am Foliensubstrat 2 ausgebildet wird (vgl. Fig. 4a, b und Fig. 5a, b und Fig. 6a, b, c, d).

Nach dem Ausbilden der Verbindungen kann vorteilhaft ein Aushärtungsprozess und/oder Kühlprozess stattfinden und insbesondere eine Vereinzelung des Endlosrohrs in, bevorzugt gleichlange, Tubenkörper, zum Beispiel durch Schneiden oder Ablängen.

In der Fig. 2a wird eine Aufsicht und in der Fig. 2b eine Seitenansicht des Umformens des Formsubstrats 1 und Foliensubstrats 2 mit einem Umformmittel 10, welches zum Beispiel als Dorn ausgebildet ist, und welches vorteilhaft an einer Aufhängung 11 angeordnet ist, gezeigt. Das Formsubstrat 1 und das Foliensubstrat 2 sind bevorzugt weitestgehend deckungsgleich angeordnet, wobei das Formsubstrat 1 vorteilhaft in der senkrecht zur Längsrichtung L verlaufenden Breitenrichtung länger sein kann, als das Foliensubstrat 2. Das Formsubstrat 1 und das Foliensubstrat 2 werden durch das Umformmittel 10 in eine Rohrform überführt, wobei das Foliensubstrat 2 ein inneres Rohr 4 ausbildet, mit bevorzugt überlappend oder auf Stoß angeordneten Längsrandseiten 2.1, 2.2, und wobei das Formsubstrat 1 ein äußeres Rohr 5 ausbildet, ebenfalls mit bevorzugt überlappend oder auf Stoß angeordneten Längsrandseiten 1.1, 1.2.

In der Fig. 3a wird eine Aufsicht und in der Fig. 3b eine Seitenansicht des Umformens des Formsubstrats 1 und Foliensubstrats 2 mit einem Umformmittel 10, welches zum Beispiel als Dorn ausgebildet ist, und welches vorteilhaft an einer Aufhängung 11 angeordnet ist, gezeigt Das Formsubstrat 1 und das Foliensubstrat 2 sind bevorzugt weitestgehend deckungsgleich angeordnet. Das Formsubstrat 1 und das Foliensubstrat 2 werden durch das Umformmittel 10 in eine Rohrform überführt, wobei das Foliensubstrat 2 ein inneres Rohr 4 ausbildet, mit bevorzugt überlappend oder auf Stoß angeordneten Längsrandseiten 2.1, 2.2, und wobei das Formsubstrat 1 ein äußeres Rohr 5 ausbildet, ebenfalls mit bevorzugt überlappend oder auf Stoß angeordneten Längsrandseiten 1.1, 1.2. Die Vorrichtung umfasst hierbei Niederhaltemittel 18, welche vorteilhaft bewirken können, dass das Foliensubstrat 2 in Bezug auf die Längsrichtung L vor dem Formsubstrat 1 umgeformt wird, wodurch besonders einfach zusätzliche Substratstreifen 17 und/oder Materialzusätze durch Zuführmittel an den Substratbahnen, insbesondere an der ersten und/oder zweiten Verbindung 15, 16, angeordnet werden können.

In der Fig. 4a wird eine erste Ausführungsform der Anordnung der Längsrandseiten, 1.1 und 1.2 des Formsubstrats 1 und der Längsrandseiten 2.1 und 2.2 des Foliensubstrats 2 nach der Umformung der Substratbahnen in ein inneres Rohr 4 und ein äußeres Rohr 5 gezeigt. Zwischen den Längsrandseiten 1.1 und 1.2 des Formsubstrats 1 ist vorteilhaft ein Haftvermittler 14, bevorzugt ein thermoplastischer Kleber, angeordnet. Bevorzugt sind die Längsrandseiten 1.1, 1.2. überlappend angeordnet und die Längsrandseiten 2.1 und 2.2 überlappend angeordnet, wobei auch eine Anordnung auf Stoß möglich ist.

In der Fig. 4b wird die Anordnung der Längsrandseiten aus Fig. 4a nach der Ausbildung der Verbindungen 15, 16 gezeigt. Die zweite Verbindung 16 ist bevorzugt als Schweißverbindung zwischen den Längsrandseiten 2.1 und 2.2 des Foliensubstrats 2 ausgebildet. Vorteilhaft kann die Verbindung 16 bereits anhaften, wenn die erste Verbindung 15 ausgebildet wird. Diese Verbindung 15 ist vorteilhaft eine Klebeverbindung, wobei der Haftvermittler 14 bevorzugt als thermoplastischer Kleber ausgebildet ist. Die Verbindung 15 und 16 sind in dieser Ausführung übereinander angeordnet, d.h. die Konturen der Verbindungen 15, 16 sind, in Bezug auf die Längsachse des Tubenrohres, wenigstens teilweise auf einer gemeinsamen radialen Linie und/oder Ebene übereinander angeordnet.

In der Fig. 5a wird eine zweite Ausführungsform der Anordnung der der Längsrandseiten, 1.1 und 1.2 des Formsubstrats 1 und der Längsrandseiten 2.1 und 2.2 des Foliensubstrats 2 nach der Umformung der Substratbahnen in ein inneres Rohr 4 und ein äußeres Rohr 5 gezeigt. Zwischen den Längsrandseiten 1.1 und 1.2 des Formsubstrats 1 ist vorteilhaft ein Haftvermittler 14, bevorzugt ein thermoplastischer Kleber, angeordnet. Bevorzugt sind die Längsrandseiten 1.1, 1.2. überlappend angeordnet und die Längsrandseiten 2.1 und 2.2 überlappen angeordnet, wobei auch eine Anordnung auf Stoß möglich ist.

In der Fig. 5b wird die Anordnung der Längsrandseiten aus Fig. 5a nach der Ausbildung der Verbindungen 15, 16 gezeigt. Die zweite Verbindung 16 ist bevorzugt als Schweißverbindung zwischen den Längsrandseiten 2.1 und 2.2 des Foliensubstrats 2 ausgebildet. Vorteilhaft kann die Verbindung 16 bereits anhaften, wenn die erste Verbindung 15 ausgebildet wird. Diese Verbindung 15 ist vorteilhaft eine Klebeverbindung, wobei der Haftvermittler 14 bevorzugt als thermoplastischer Kleber ausgebildet ist. Die Verbindung 15 und 16 sind in dieser Ausführung nebeneinander, insbesondere formschlüssig nebeneinander bzw. direkt aneinander anliegend, angeordnet. In anderen Worten sind die Verbindungen, in Bezug auf die Längsachse des Tubenrohres, bevorzugt unmittelbar, nebeneinander an einer gemeinsamen radialen Linie anliegend bzw. in Umfangsrichtung aufeinanderfolgend angeordnet.

In der Fig. 6a wird eine dritte Ausführungsform der Anordnung der der Längsrandseiten, 1.1 und 1.2 des Formsubstrats 1 und der Längsrandseiten 2.1 und 2.2 des Foliensubstrats 2 nach der Umformung der Substratbahnen in ein inneres Rohr 4 und ein äußeres Rohr 5 gezeigt. Zwischen und über den Längsrandseiten 1.1 und 1.2 des Formsubstrats 1 ist vorteilhaft jeweils eine Substratbahn 17 angeordnet, die besonders bevorzugt als Haftvermittler wirken und insbesondere verschweißbar sind. Zwischen und unter den Längsrandseiten 2.1 und 2.2 des Foliensubstrats 2 und zusätzlich zwischen den Substratbahnen sind vorteilhaft ebenso jeweils eine Substratbahn 17 angeordnet, die besonders bevorzugt als Haftvermittler wirken und insbesondere verschweißbar und/oder verklebbar sind. Die Substratbahnen 17 können dabei aus dem gleichen oder aus unterschiedlichen Materialien bestehen, welche insbesondere in ihren Hafteigenschaften an das Foliensubstrat und/oder Formsubstrat angepasst sein können.

In der Fig. 6b wird eine vierte Ausführungsform der Anordnung der der Längsrandseiten, 1.1 und 1.2 des Formsubstrats 1 und der Längsrandseiten 2.1 und 2.2 des Foliensubstrats 2 nach der Umformung der Substratbahnen in ein inneres Rohr 4 und ein äußeres Rohr 5 gezeigt. Unter und über den Längsrandseiten 1.1 und 1.2 des Formsubstrats 1 ist vorteilhaft jeweils eine Substratbahn 17 angeordnet, die besonders bevorzugt als Haftvermittler wirken und insbesondere verschweißbar sind. In dieser Ausführung sind die Längsrandseiten 1.1 und 1.2 auf Stoß angeordnet, wobei auch eine überlappende Anordnung möglich ist. Unter den Längsrandseiten 2.1 und 2.2 des Foliensubstrats 2 ist vorteilhaft ebenso eine Substratbahn 17 angeordnet, die besonders bevorzugt als Haftvermittler wirkt und insbesondere verschweißbar ist. Die Substratbahnen 17 können dabei aus dem gleichen oder aus unterschiedlichen Materialien bestehen, welche insbesondere in ihren Hafteigenschaften an das Foliensubstrat und/oder Formsubstrat angepasst sein können.

In der Fig. 6c wird eine fünfte Ausführungsform der Anordnung der der Längsrandseiten, 1.1 und 1.2 des Formsubstrats 1 und der Längsrandseiten 2.1 und 2.2 des Foliensubstrats 2 nach der Umformung der Substratbahnen in ein inneres Rohr 4 und ein äußeres Rohr 5 gezeigt. Über den Längsrandseiten 1.1 und 1.2 des Formsubstrats 1 ist vorteilhaft eine Substratbahn 17 angeordnet, die besonders bevorzugt als Haftvermittler wirkt und insbesondere verschweißbar ist. In dieser Ausführung sind die Längsrandseiten 1.1 und 1.2 auf Stoß angeordnet, wobei auch eine überlappende Anordnung möglich ist.

In der Fig. 6d wird eine fünfte Ausführungsform der Anordnung der der Längsrandseiten, 1.1 und 1.2 des Formsubstrats 1 und der Längsrandseiten 2.1 und 2.2 des Foliensubstrats 2 nach der Umformung der Substratbahnen in ein inneres Rohr 4 und ein äußeres Rohr 5 gezeigt.

Die Längsrandseiten 1.1 und 1.2 des Formsubstrats 1 sind hierbei, bevorzugt durch eine Zuschnittvorrichtung, derart zugeschnitten, dass die Längsrandseiten 1.1, 1.2, bei dem äußeren Rohr 5 radial nur im Bereich der Außenseite mit zumindest einer durch die Zuschneidung gebildeten Spitze, insbesondere auf Stoß, aneinander liegen. Über und unter den Längsrandseiten 1.1 und 1.2 des Formsubstrats 1 ist vorteilhaft jeweils eine Substratbahn 17 angeordnet, die besonders bevorzugt als Haftvermittler wirken und insbesondere verschweißbar sind. Die Substratbahnen 17 können dabei aus dem gleichen oder aus unterschiedlichen Materialien bestehen, welche insbesondere in ihren Hafteigenschaften an das Foliensubstrat und/oder Formsubstrat angepasst sein können.

In der Fig. 7 wird eine Substratbahn des Formsubstrats 1 vor dem Umformen gezeigt. Das Formsubstrat 1 weist vorteilhaft auf der Außenseite eine Bedruckung 3 auf und auf der Innenseite, bevorzugt in Relation zur Bedruckung 3 aufgebrachte, erste Haftvermittler 13. Die Haftvermittler 13 können bevorzugt nur schwach haftend sein und weiter bevorzugt restlos entfernbar sein. Weiterhin können die Haftvermittler 13 zum Beispiel punktuell, in Linien, Bahnen, flächig oder in Kombinationen verschiedenere Ausführungen aufgetragen werden. Bevorzugt werden die Haftvermittler 13 vor dem Umformen des Formsubstrats 1 aufgetragen, wobei auch denkbar ist den Haftvermittler 13 parallel oder nachgeordnet zum Umformen aufzutragen.

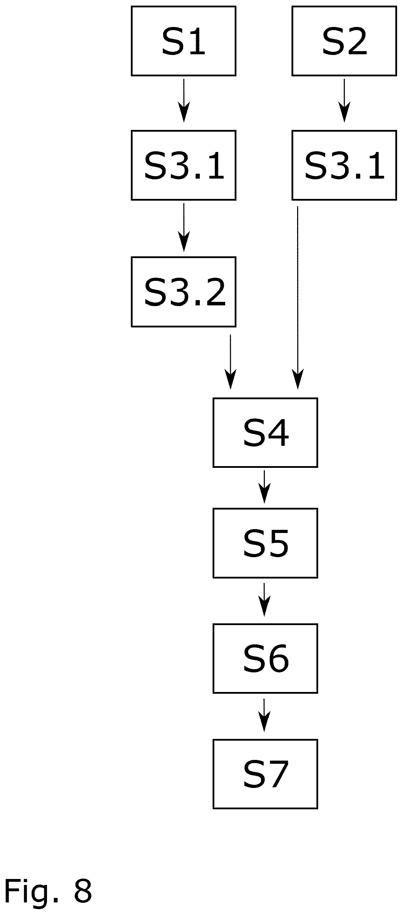

In der Fig. 8 ist eine erste Ausführung einer möglichen Verfahrensführung gezeigt. In einem Verfahrensschritt S1 wird eine Substratbahn aus einer Substratabrollvorrichtung, für ein Formsubstrat 1 bereitgestellt. Das Formsubstrat 1 ist bevorzugt faserhaltig oder weist faserhaltige Bestandteile auf, und umfasst insbesondere wenigstens auf einer Seite eine Bedruckung 3. In Verfahrensschritt S2 wird ein Foliensubstrat 2 als Substratbahn aus einer Substratabrollvorrichtung bereitgestellt, wobei das Foliensubstrat 2 wenigstens eine verschweißbare Kunststoffschicht umfasst oder aus einer solchen besteht. Auf dem Formsubstrat 1 und/oder auf dem Foliensubstrat 2 wird in einem Verfahrensschritt S3.1 ein erster Haftvermittler 13 aufgebracht. Der erste Haftvermittler 13 kann vorteilhaft nur schwach haftend ausgebildet sein und bevorzugt restlos entfernbar ausgebildet sein. Vorteilhaft wird der Haftvermittler 13 zum Beispiel punktuell und/oder in Linien, Bahnen oder Kombinationen von Ausführungen aufgetragen. Auf dem Formsubstrat 1 wird in einem Verfahrensschritt 3.2 vorteilhaft wenigstens ein zweiter Haftvermittler 14, insbesondere ein thermoplastischer Kleber, aufgebracht, wobei der Haftvermittler 14 bevorzugt entlang der Längsrichtung L aufgebracht wird und einen definierten Abstand zu einer Längsrandseite 1.1 oder 1.2 aufweist, oder direkt an der Längsrandseite angeordnet ist, oder potentiell wenigstens teilweise über die Längsrandseite 1.1 oder 1.2 hinausstehend angeordnet ist. Das Auftragen der Haftvermittler 13 und 14 kann alternativ zu der gezeigten Verfahrensführung in beliebiger Reihenfolge oder auch parallel stattfinden. In einem Verfahrensschritt S4 werden die Substratbahnen durch Einlaufrollen 19 zusammengeführt, wobei die Seiten der Substratbahnen auf welchen die Haftvermittler 13 aufgetragen sind vorteilhaft zueinander ausgerichtet sind, und wobei die Substratbahnen bevorzugt wenigstens annähernd deckungsgleich angeordnet sind. Darauf in einem Verfahrensschritt S5 folgend, werden die Substratbahnen zu einer Rohrform umgeformt, zum Beispiel durch ein Umformmittel 10, wobei das Foliensubstrat 2 ein inneres Rohr 4 ausbildet, mit bevorzugt überlappend oder auf Stoß angeordneten Längsrandseiten 2.1 und 2.2, und wobei das Formsubstrat 1 ein inneres Rohr ausbildet, mit bevorzugt überlappend oder auf Stoß angeordneten Längsrandseiten 1.1 und 1.2. Dabei kann ebenso vorgesehen sein, dass durch Niederhaltemittel 18 bewirkt wird, dass das Foliensubstrat 2 in Bezug auf die Längsrichtung L vor dem Formsubstrat 1 umgeformt wird, wodurch besonders einfach zusätzliche Substratstreifen 17 und/oder Materialzusätze durch Zuführmittel an den Substratbahnen, insbesondere an der ersten und/oder zweiten Verbindung 15, 16, angeordnet werden können. Die Längsrandseiten 1.1, 1.2, 2.1 und 2.2 werden in einem Verfahrensschritt S6 zwischen einem inneren Kontaktband 7 und einem äußeren Kontaktband 6 geführt, wobei bevorzugt dem inneren Kontaktband 7 eine innere Heizvorrichtung 9 zugeordnet ist und dem äußeren Kontaktband 6 eine äußere Heizvorrichtung 8 zugeordnet ist. Die Längsrandseiten 1.1, 1.2, 2.1 und 2.2 werden durch die innere und äußere Heizvorrichtung 9, 8 erhitzt wodurch eine erste Verbindung 15, bevorzugt Klebeverbindung, am Formsubstrat 1 ausgebildet wird und eine zweite Verbindung 16, bevorzugt Schweißverbindung, am Foliensubstrat ausgebildet wird. Die zweite Verbindung 16 kann vorteilhaft bereits haften, wenn die erste Verbindung 15 ausgebildet wird, alternativ kann auch die erste Verbindung 15 vor der zweiten Verbindung 16 haften oder beide Verbindungen annähernd zeitgleich haften. Die Verbindungen 15, 16 können vorteilhaft übereinander oder nebeneinander angeordnet sein und sind bevorzugt formschlüssig aneinander angeordnet. Weiterbevorzugt kann das Aushärten des in Verfahrensschritt S3.1 zwischen den Substratbahnen aufgebrachten ersten Haftvermittlers 13 während und nach dem Herstellen der Verbindungen 15, 16 noch andauern. Nach dem Ausbilden der Verbindungen 15, 16 kann potentiell ein Aushärten der Verbindungen 15, 16 und/oder des Haftvermittlers 13 durch eine Kühlvorrichtung beschleunigt werden. In einem Verfahrensschritt S7 wird das Endlosrohr in, insbesondere gleich lange, Tubenkörper zerteilt, welche aus einem äußeren Rohr 5 und einem inneren Rohr 4 bestehen. Die Tubenkörper können bevorzugt an eine Kopfverbindungsvorrichtung weitertransportiert werden.
- 1: Formsubstrat
- 1.1: Erste Längsrandseite
- 1.2: Zweite Längsrandseite
- 2: Foliensubstrat
- 2.1: Erste Längsrandseite
- 2.2: Zweite Längsrandseite
- 3: Bedruckung
- 4: Inneres Rohr
- 5: Äußeres Rohr
- 6: Äußeres Kontaktband
- 7: Inneres Kontaktband
- 8: Äußere Heizvorrichtung
- 9: Innere Heizvorrichtung
- 10: Umformmittel
- 11: Aufhängung der Umformmittel
- 12: Antriebsmittel
- 13: Erster Haftvermittler
- 14: Zweiter Haftvermittler
- 15: Erste Verbindung
- 16: Zweite Verbindung
- 17: Substratstreifen
- 18: Niederhaltemittel
- 19: Einlaufrollen
- 21: Erste Düse
- 22: Zweite Düse

- L: Längsrichtung

- S1: Bereitstellen eines Formsubstrats
- S2: Bereitstellen eines Foliensubstrats
- S3.1: Aufbringen eines ersten Haftvermittlers
- S3.2: Aufbringen eines zweiten Haftvermittlers
- S4: Zusammenführen der Substratbahnen
- S5: Umformen der Substratbahnen
- S6: Herstellen der Verbindung
- S7: Vereinzeln der Tubenkörper

## Patentansprüche

1. Verfahren zur Herstellung von flexiblen Tubenkörpern für Verpackungstuben aus zwei, bevorzugt getrennten, besonders bevorzugt unterschiedliche Materialien aufweisenden, Substratbahnen,
wobei eine erste Substratbahn von einem, bevorzugt auf einer Außenseite eine Bedruckung (3) aufweisenden, Formsubstrat (1) gebildet wird, welches bevorzugt faserhaltig ist oder faserhaltige Bestandteile aufweist, und welches eine sich in eine Längsrichtung (L) erstreckende erste Längsrandseite (1.1) und eine hierzu parallele und beabstandete zweite Längsrandseite (1.2) umfasst,
und die zweite Substratbahn von einem Foliensubstrat (2) gebildet wird, welches mindestens eine verschweißbare Kunststoffschicht aufweist oder aus dieser besteht und welches eine sich in eine Längsrichtung erstreckende erste Längsrandseite (2.1) und eine hierzu parallele und beabstandete zweite Längsrandseite (2.2) umfasst,
**gekennzeichnet durch** folgende Verfahrensschritte:
I) Zuführen der Substratbahnen wobei während des Zuführens die Substratbahnen benachbart zueinander, bevorzugt im Wesentlichen deckungsgleich, angeordnet werden,
II) Umformen des Formsubstrats (1) und des Foliensubstrats (2) mit, bevorzugt gemeinsamen, Umformmitteln (10) zu einer Rohrform, wobei das Formsubstrat (1) ein äußeres Rohr (5) und das Foliensubstrat ein inneres Rohr (4) ausbildet, und wobei für das äußere Rohr (5) und das innere Rohr (4) eine Überlapp- oder Stoßanordnung der jeweiligen Längsrandseiten (1.1, 1.2, 2.1, 2.2) erzeugt wird,
III) Führen der Längsrandseiten (1.1, 1.2, 2.1, 2.2) des Formsubstrats (1) und des Foliensubstrats (2), zwischen einem äußeren und einem inneren, bevorzugt umlaufend angetriebenen, Kontaktband (6, 7),
IV) Erwärmen der Längsrandseiten (1.1, 1.2, 2.1, 2.2) des Formsubstrats (1) und des Foliensubstrats (2) über eine innere und/oder äußere Heizeinrichtung (8, 9), wobei eine erste Verbindung (15), bevorzugt Klebeverbindung, zwischen den Längsrandseiten (1.1, 1.2) des Formsubstrats (1) und eine zweite Verbindung (16), bevorzugt Längsschweißnaht, zwischen den Längsrandseiten (2.1, 2.2) des Foliensubstrats (2) ausgebildet wird.

2. Verfahren nach Anspruch 1,
**dadurch gekennzeichnet,**
**dass** an wenigstens einer Längsrandseite (1.1, 1.2) des Formsubstrats (1), bevorzugt vor dem Umformen, Haftvermittler (14), bevorzugt thermoplastischer Kleber, aufgetragen wird.

3. Verfahren nach Anspruch 1 oder 2
**dadurch gekennzeichnet,**
**dass** auf das Formsubstrat (1) und/oder das Foliensubstrat (2), bevorzugt punktuell und/oder blockartig, wenigstens ein Haftvermittler (13) derart aufgetragen wird, so dass dieser zwischen Formsubstrat (1) und Foliensubstrat (2) angeordnet ist und während des Zuführens oder beim Umformen ein Anhaften zwischen Formsubstrat (1) und Foliensubstrat (2) bewirkt, wodurch ein Verrutschen des Foliensubstrats (2) gegenüber dem Formsubstrat (1) verhindert wird.

4. Verfahren nach Anspruch 3,
**dadurch gekennzeichnet,**
**dass** zwischen dem Formsubstrat (1) und Foliensubstrat (2) eingesetzte Haftvermittler (13) restlos entfernbar sind.

5. Verfahren nach Anspruch 3 oder 4,
**dadurch gekennzeichnet,**
**dass** der Haftvermittler (13) zwischen dem Formsubstrat (1) und Foliensubstrat (2) in Abhängigkeit eines, auf der Außenseite des Formsubstrats (1) befindlichen Druckbildes (3) aufgebracht wird.

6. Verfahren nach einem der vorhergehenden Ansprüche,
**dadurch gekennzeichnet,**
**dass** nach dem Erwärmen und nach dem Ausbilden der Verbindungen (15, 16) zwischen den Längsrandseiten (1.1, 1.2, 2.1, 2.2) das äußere Rohr (5) und das innere Rohr (4) gleichzeitig und/oder zusammen, bevorzugt unter Ausbildung von Rohrstücken mit gleicher Länge in Längsrichtung (L), vereinzelt werden.

7. Verfahren nach Anspruch 6,
**dadurch gekennzeichnet,**
**dass** vereinzelte Paare von Rohrstücken, umfassend ein inneres und ein äußeres Rohrstück, gemeinsam, bevorzugt in Längsrichtung (L) vollständig überlappend, weitertransportiert und an eine Kopfverbindungsvorrichtung übergeben werden.

8. Verfahren nach einem der vorhergehenden Ansprüche,
**dadurch gekennzeichnet,**
**dass** das Foliensubstrat (2) und das Formsubstrat (1) von zwei getrennten Substratabrollvorrichtungen, bevorzugt von getrennten Substratrollen zugeführt wird.

9. Verfahren nach einem der vorhergehenden Ansprüche,
**dadurch gekennzeichnet,**
**dass** wenigstens ein, bevorzugt wenigstens zwei, besonders bevorzugt mehr als zwei, weitere/r Substratstreifen (17), insbesondere Verstärkungsstreifen, und/oder Materialzusatz/ Materialzusätze im Bereich der ersten und/oder zweiten Verbindung angeordnet wird/werden, welche/r zumindest abschnittsweise mit den Längsrandseiten verbunden, insbesondere verschweißt wird/ werden.

10. Verfahren nach einem der vorhergehenden Ansprüche,
**dadurch gekennzeichnet,**
**dass** die Umformung des Formsubstrats (1) in Relation zu der Umformung des Foliensubstrats (2), entlang der Längsrichtung (L) versetzt, insbesondere später, beginnt, wobei die Umformung des Foliensubstrats (2) zusätzlich zu den Umformmitteln (10) durch Niederhaltemittel (18) bewirkt wird.

11. Verfahren nach einem der vorhergehenden Ansprüche,
**dadurch gekennzeichnet,**
**dass** das Formsubstrat (1) und/oder das Foliensubstrat (2) vor dem Umformen von wenigstens einer Zuschnittvorrichtung zugeschnitten werden.

12. Flexibler Tubenkörper,
bevorzugt hergestellt mit einem Verfahren nach einem der Ansprüche 1 bis 16,
umfassend ein äußeres Tubenrohr (5), aus einem bevorzugt auf einer Außenseite eine Bedruckung (3) aufweisenden, Formsubstrat (1), welches bevorzugt faserhaltig ist oder faserhaltige Bestandteile aufweist, und ein inneres Tubenrohr (4), aus einem Foliensubstrat (2), welches mindestens eine verschweißbare Kunststoffschicht aufweist oder aus dieser besteht,
wobei eine erste Verbindung (15), bevorzugt Klebeverbindung, zwischen den Längsrandseiten (1.1, 1.2) des Formsubstrats (1) und eine zweite Verbindung (16), bevorzugt Längsschweißnaht, zwischen den Längsrandseiten (2.1, 2.2) des Foliensubstrats (2) ausgebildet ist,
**dadurch gekennzeichnet,**
**dass** die erste Verbindung und die zweite Verbindung, in Bezug auf die Längsachse des Tubenkörpers in radialer Richtung, bevorzugt bündig, insbesondere formschlüssig, wenigstens teilweise übereinander angeordnet sind oder nebeneinander angeordnet sind.

13. Tubenkörper nach Anspruch 12,
**dadurch gekennzeichnet,**
**dass** das Formsubstrat (1) eine Materialstärke von 100 bis 200 g/m² aufweist, bevorzugt 130 bis 170 g/m² und/oder das Foliensubstrat (2) eine Materialdicke von 30 bis 150 µm aufweist, bevorzugt 50 bis 80 µm.

14. Vorrichtung zur Herstellung von flexiblen Tubenkörpern für Verpackungstuben, bevorzugt nach einem Verfahren nach einem der Ansprüche 1 bis 16,
insbesondere für die Herstellung von Tubenkörpern aus wenigstens zwei, bevorzugt getrennten, besonders bevorzugt unterschiedliche Materialien aufweisenden Substratbahnen, insbesondere aus einem, bevorzugt faserhaltigen oder faserhaltige Bestandteile aufweisenden, Formsubstrat (1) welches eine sich in eine Längsrichtung (L) erstreckende erste Längsrandseite (1.1) und eine hierzu parallele und beabstandete zweite Längsrandseite (1.2) umfasst, und einem Foliensubstrat (2), welches mindestens eine verschweißbare Kunststoffschicht aufweist oder aus dieser besteht, welches eine sich in eine Längsrichtung erstreckende erste Längsrandseite (2.1) und eine hierzu parallele und beabstandete zweite Längsrandseite (2.2) umfasst, wobei, bevorzugt gemeinsame, Umformmittel (10) umfasst sind, welche derart eingerichtet sind, dass das Formsubstrat (1) und das Foliensubstrat (2) zu einer Rohrform geformt werden, wobei das Formsubstrat (1) ein äußeres Rohr (5) und das Foliensubstrat ein inneres Rohr (4) ausbildet, und wobei das äußere Rohr (5) und das innere Rohr (4) eine Überlapp- oder Stoßanordnung der jeweiligen Längsrandseiten (1.1, 1.2, 2.1, 2.2) aufweisen, wobei ein äußeres und ein inneres, bevorzugt umlaufend angetriebenes, Kontaktband (7, 8) derart angeordnet sind, dass die Längsrandseiten (1.1, 1.2, 2.1, 2.2) des Formsubstrats (1) und des Foliensubstrats (2), zwischen dem äußeren und inneren Kontaktband (7, 8) geführt werden, und dass die Vorrichtung eine innere und/oder äußere Heizeinrichtung (8, 9), umfasst, welche die Längsrandseiten (1.1, 1.2, 2.1, 2.2) des Formsubstrats (1) und des Foliensubstrats (2) derart erwärmt, dass eine erste Verbindung (15), bevorzugt Klebeverbindung, zwischen den Längsrandseiten (1.1, 1.2) des Formsubstrats (1) und eine zweite Verbindung (16), bevorzugt Längsschweißnaht, zwischen den Längsrandseiten (2.1, 2.2) des Foliensubstrats (2) ausgebildet wird, wobei die Vorrichtung wenigstens zwei getrennte Substratabrollvorrichtungen umfasst, welche für die Zuführung von zwei, bevorzugt getrennten, besonders bevorzugt unterschiedliche Materialien aufweisenden, Substratbahnen ausgebildet sind.

15. Vorrichtung zur Herstellung von flexiblen Tubenkörpern nach Anspruch 14,
**dadurch gekennzeichnet,**
**dass** die Vorrichtung Einlaufrollen (19) umfasst, welche derart angeordnet sind, dass die Substratbahnen während des Zuführens benachbart zueinander, bevorzugt im Wesentlichen deckungsgleich, angeordnet werden.

16. Vorrichtung zur Herstellung von flexiblen Tubenkörpern nach Anspruch 14 oder 15,
**dadurch gekennzeichnet,**
**dass** die Vorrichtung wenigstens eine erste Düse (21) umfasst, welche dazu ausgebildet ist auf das Formsubstrat (1) und/oder das Foliensubstrat (2), wenigstens einen Haftvermittler (14), bevorzugt thermoplastischen Kleber, aufzutragen.

17. Vorrichtung zur Herstellung von flexiblen Tubenkörpern nach Anspruch einem der Ansprüche 14 bis 16,
**dadurch gekennzeichnet,**
**dass** die Vorrichtung wenigstens eine zweite Düse (22), bevorzugt einen Düsenbalken, umfasst, welche dazu ausgebildet ist auf das Formsubstrat (1) und/oder das Foliensubstrat (2), bevorzugt punktuell und/oder blockartig, wenigstens einen Haftvermittler (13) aufzutragen.

18. Vorrichtung zur Herstellung von flexiblen Tubenkörpern nach Anspruch einem der Ansprüche 14 bis 17,
**dadurch gekennzeichnet,**
**dass** an der Vorrichtung Niederhaltemittel (18) ausgebildet sind, welche derart angeordnet sind, dass sie das Foliensubstrat (2) zusätzlich zu den Umformmitteln (10) führen, insbesondere derart, dass die Umformung des Foliensubstrats (2) entlang der Längsrichtung (L) vor der Umformung des Formsubstrats (1) beginnt.

19. Vorrichtung zur Herstellung von flexiblen Tubenkörpern nach Anspruch einem der Ansprüche 14 bis 18,
**dadurch gekennzeichnet,**
**dass** wenigstens ein Zuführmittel (20) derart angeordnet ist, dass wenigstens ein, bevorzugt wenigstens zwei, besonders bevorzugt mehr als zwei, weitere/r Substratstreifen (17), insbesondere Verstärkungsstreifen, und/oder Materialzusatz/ Materialzusätze im Bereich der ersten und/oder zweiten Verbindung zugeführt wird

20. Vorrichtung zur Herstellung von flexiblen Tubenkörpern nach Anspruch einem der Ansprüche 14 bis 19,
**dadurch gekennzeichnet,**
**dass** die Einlaufrollen (19) derart angeordnet sind, dass das Formsubstrat (1) und das Foliensubstrat (2) beim Passieren der letzten Einlaufrolle (19) wenigstens teilweise voneinander beabstandet sind, insbesondere um 0 bis 15° konvergierend verlaufen, wobei das Formsubstrat (1) und das Foliensubstrat (2) bei Beginn der Umformung, bevorzugt unmittelbar, benachbart zueinander, weiter bevorzugt im Wesentlichen deckungsgleich, angeordnet sind.

21. Vorrichtung zur Herstellung von flexiblen Tubenkörpern nach Anspruch einem der Ansprüche 14 bis 20,
**dadurch gekennzeichnet,**
**dass** die Vorrichtung wenigstens eine Schnittvorrichtung, bevorzugt eine für jede verwendete Substratbahn und/oder Materialzusatz, insbesondere zum Zuschneiden der Substratbahnen vor der Umformung, umfasst.
